# EUROPEAN PATENT APPLICATION

(11) **EP 4 474 070 A1**
(43) Date of publication of application: **11.12.2024**
(21) Application number: 23749889.4
(22) Date of filing: 06.02.2023
(51) Int. Cl.: B09B 5/00, C08J 3/12, C08J 3/24, C08F 220/06

(54) **METHOD FOR RECYCLING WATER ABSORBENT RESIN AND METHOD FOR PRODUCING WATER ABSORBENT RESIN**

(30) Priority: 04.02.2022 JP 2022016732
(71) Applicant: Nippon Shokubai Co., Ltd., Osaka-shi, Osaka 541-0043 (JP)
(72) Inventor: KOBAYASHI, Nobuhiro, Himeji-shi, Hyogo 671-1282 (JP); MATSUI, Daisuke, Himeji-shi, Hyogo 671-1282 (JP); KIMURA, Kazuki, Himeji-shi, Hyogo 671-1282 (JP); TORII, Kazushi, Himeji-shi, Hyogo 671-1282 (JP); TAMAKI, Mariko, Himeji-shi, Hyogo 671-1282 (JP); TAJIMA, Shun-ichi, Himeji-shi, Hyogo 671-1282 (JP); ISHIZAKI, Kunihiko, Himeji-shi, Hyogo 671-1282 (JP)
(74) Representative: Schön, Christoph
(86) International application number: PCT/JP2023/003773
(87) International publication number: WO 2023/149573

(57) **Abstract**

Provided are a method for producing a recycled water-absorbing resin which achieves reduction in deterioration of water absorption performance and reduction in coloration, and a method for producing a water-absorbing resin with use of the recycled water-absorbing resin. An embodiment of the present invention relates to, for example, a method for producing a recycled water-absorbing resin from a used absorbent article, the method including: a urea removal step of removing urea so that a urea content in the recycled water-absorbing resin becomes 2 mass% or less; and a recovery step of recovering a water-absorbing property.

## Description

### Technical Field

The present invention relates to a method for recycling a water-absorbing resin contained in a used absorbent article and a method for producing a water-absorbing resin using, as one of raw materials, for example, a recycled water-absorbing resin.

### Background Art

In recent years, in absorbent articles such as a disposable diaper, a sanitary napkin, and an incontinence pad, from the viewpoint of absorption of body fluid, a water-absorbing resin constituting the absorbent articles is widely used as a water-absorbing agent. Known examples of such a water-absorbing resin include a hydrolyzate of a starch-acrylonitrile graft copolymer, a neutralized product of a starch-acrylic acid graft polymer, a saponified product of a vinyl acetate-acrylic ester copolymer, and a crosslinked product of a partially neutralized acrylic acid polymer. Among others, from the viewpoint of water absorption performance, a polyacrylic acid (salt)-based water absorbent resin formed by using an acrylic acid and/or a salt thereof as a monomer(s) is industrially most often produced.

Absorbent articles are generally disposable. However, there is a growing interest in recycling of hygienic materials because of growing environmental awareness (Patent Literatures 1 and 2). Also for a water-absorbing resin used in absorbent articles, a technique for recycling the water-absorbing resin as a water-absorbing resin or another useful substance has been developed (Patent Literatures 3 to 7). Further, since bacteria (e.g., general bacteria, staphylococci, and E. *coli*) adhere to used absorbent articles, a technique for sterilizing the used absorbent articles is also known (Patent Literatures 1 to 3).

### Citation List

### [Patent Literature]

[Patent Literature 1]
   Japanese Patent Application Publication Tokukai No. 2019-178461
[Patent Literature 2]
   Japanese Patent Application Publication Tokukai No. 2006-320900
[Patent Literature 3]
   Japanese Patent Application Publication Tokukai No. 2003-135519
[Patent Literature 4]
   International Publication No. WO 2021/044690
[Patent Literature 5]
   International Publication No. WO 2021/162071
[Patent Literature 6]
   International Publication No. WO 2021/162082
[Patent Literature 7]
   International Publication No. WO 2020/213298

### Summary of Invention

### Technical Problem

Presently, various methods for recycling water-absorbing resins from used absorbent articles are being developed. However, water absorption performance and color of water-absorbing resins obtained by recycling with use of such techniques are not as good as those of unused water-absorbing resins. Accordingly, further improvement is required. In order to achieve the improvement, it is possible to add an inorganic acid alkali metal salt (sodium sulfite, sodium hydrogen sulfite) of the conventional art, but addition of a large amount of such a substance leads to, for example, an increase in raw material cost.

An object of an aspect of the present invention is to provide a method for producing, without an increase in material cost, a recycled water-absorbing resin which achieves reduction in deterioration of water absorption performance and reduction in coloration, and a method for producing a water-absorbing resin with use of the recycled water-absorbing resin.

### Solution to Problem

The inventors of the present invention have found that conventional recycled water-absorbing resins contain, in a large amount, urea as one of foreign substances/impurities. This is because in the conventional art, these foreign substances/ impurities are not removed since a regeneration process is constrained for improvement of the water absorption performance.

An embodiment of the present invention relates to a method for recycling a water-absorbing resin contained in a used absorbent article, the method including: a urea removal step of removing urea from the water-absorbing resin contained in the used absorbent article so that a urea content in a recycled water-absorbing resin becomes 2 mass% or less; and a recovery step of recovering a water-absorbing property of the water-absorbing resin after the urea removal step.

### Advantageous Effects of Invention

An aspect of the present invention can provide a method for producing a recycled water-absorbing resin which achieves reduction in deterioration of water absorption performance and reduction in coloration caused by a foreign substance(s)/impurity(ies) in comparison with an unused water-absorbing resin. Further, it is possible to provide a method for producing a water-absorbing resin which uses, as one of water-absorbing resin raw materials, a recycled water-absorbing resin and/or a water-soluble polymer that is a decomposition product of the recycled water-absorbing resin, and which is excellent in water absorption performance and also excellent in reduction of coloration.

### Description of Embodiments

### <First embodiment>

### [1-1] Technical idea of first embodiment

In a method for recycling an absorbent article disclosed in Patent Literatures 1 to 3, sterilization is carried out by performing, for example, a process at a high temperature, a process with use of an oxidizer, and/or a process of immersion into a liquid that has a disinfection effect, since many bacteria originating from human waste are attached to used absorbent articles. Certainly, used absorbent articles are sterilized by such processes. However, in a case where many impurities originating from human waste are remaining, problems of deterioration in water absorption physical properties of recycled water-absorbing resins and coloration of the recycled water-absorbing resins arise.

In response to these problems, the inventors of the present invention have found that the deterioration of water absorption performance and the coloration can be reduced by removing the impurities originating from human waste in the recycled water-absorbing resins. In particular, setting a remaining amount of urea, the content of which is large in human waste, to 2 mass% or less in a recycled water-absorbing resin is effective for reduction in deterioration of water absorption performance and reduction in coloration.

### [1-2] Method 1 for producing recycled water-absorbing resin in accordance with one aspect of first embodiment

In an aspect of the first embodiment, a method for producing a recycled water-absorbing resin refers to a method of recycling a water-absorbing resin which is present inside a used absorbent article and which contains absorbed liquid such as human waste. This method includes: a urea removal step of removing urea so that a urea content in a water-absorbing resin contained in a used absorbent article becomes 2 mass% or less; and a recovery step of recovering performance of the water-absorbing resin after the urea removal step.

Note that the wording "water-absorbing resin after the urea removal step" refers to a water-absorbing resin that is obtained through the urea removal step.

### [1-2-1] Absorbent article

The term "absorbent article" refers to an article which is used in water absorption applications. More specifically, the term "absorbent article" refers to an absorbent article which includes an absorbent body that contains a water-absorbing resin and a fibrous material, a surface sheet that has liquid permeability, and a back sheet that has liquid impermeability. The aforementioned absorbent body is more suitably produced by blending the water-absorbing resin and the fibrous material with each other or by sandwiching the water-absorbing resin between fibrous materials and forming the water-absorbing resin and the fibrous materials into a film shape, a cylindrical shape, a sheet shape, or the like. Examples of the fibrous materials include hydrophilic fibers such as crushed wood pulp, cotton linter, crosslinked cellulosic fibers, rayon, cotton, wool, acetate, and vinylon.

In the method for producing a recycled water-absorbing resin in accordance with an aspect of the first embodiment, the "used absorbent article" includes, in particular, used hygienic materials which have absorbed body fluid (absorbed liquid) such as urine or blood. Examples of the hygienic materials include hygienic materials (sanitary materials) such as paper diapers, sanitary napkins, incontinence products for adults (incontinence pads), and sheets for pets.

### [1-2-2] Water-absorbing resin

The term "water-absorbing resin" refers to a water-swellable, water-insoluble polymer gelling agent. Although not particularly limited, the term "water-absorbing resin" refers to a conventional water-absorbing resin which has a fluid retention capacity of 10 times to 1000 times. More specifically, it is preferable that the water-absorbing resin (hereinafter, also referred to as "initial water-absorbing resin") before taking in liquid to be absorbed satisfy a physical property that CRC, which is defined as a "water-swelling property" in ERT 441.2-02, is 5 g/g or more.

In the first embodiment, specific examples of the water-absorbing resin include a polyacrylic acid (salt)-based resin, a polysulfonic acid (salt)-based resin, a maleic anhydride (salt)-based resin, a polyacrylamide-based resin, a polyvinyl alcohol-based resin, a polyethylene oxide-based resin, a polyaspartic acid (salt)-based resin, a polyglutamic acid (salt)-based resin, a polyalginic acid (salt)-based resin, a starch-based resin, a cellulose-based resin, a (meth)acrylic acid salt crosslinked polymer, a saponified crosslinked (meth)acrylic acid ester-vinyl acetate copolymer, and a starch-acrylic acid salt graft polymer and a crosslinked substance thereof.

### [1-2-3] Recycled water-absorbing resin

In the first to third embodiments, the term "recycled water-absorbing resin" refers to a resin obtained by recycling, for applications that require a water-absorbing function, a water-absorbing resin which contains absorbed liquid such as urine contained in a used absorbent article and which is considered to be of no use and only to be discarded. In other words, the "recycled water-absorbing resin" refers a resin that is obtained by returning, to a usable condition for water-absorbing purposes, a water-absorbing resin which has been taken out from a used water absorbent article and which has ordinarily been discarded, thermally recycled as fuel, composted, or the like. In other words, the "recycled water-absorbing resin" refers to a water-absorbing resin that has absorption performance recovered and that can be used for water-absorbing purposes. Examples of the recycled water-absorbing resin include, but are not limited to, water-absorbing resins (i) to (iv) described below.
(i) A water-absorbing resin obtained by recovering, through a urea removal step and a recovery step which will be described later, a water-absorbing property of a water-absorbing resin contained in a used absorbent article.
(ii) A water-absorbing resin produced by adding the recycled water-absorbing resin in the above (i) in a production process of a (conventional) water-absorbing resin in which a water-absorbing-resin-forming monomer is used as a raw material.
(iii) A water-absorbing resin produced by adding a resin (used water-absorbing resin after a urea removal treatment) which has been subjected to only the urea removal step in the above (i), in a production process of a (conventional) water-absorbing resin in which a water-absorbing-resin-forming monomer is used as a raw material.
(iv) A water-absorbing resin produced by adding a product (water-soluble polymer) obtained by a solubilizing treatment of a water-absorbing resin contained in a used absorbent article, in a production process of a (conventional) water-absorbing resin in which a water-absorbing-resin-forming monomer is used as a raw material.
(v) A water-absorbing resin obtained by converting a water-absorbing resin contained in a used absorbent article to a monomer (such as acrylic acid) by a chemical treatment on the water-absorbing resin, then forming a water-soluble polymer by polymerizing the monomer and using the water-soluble polymer as one of raw materials, in a production process of a (conventional) water-absorbing in which a water-absorbing-resin-forming monomer is used as a raw material resin.
(vi) A water-absorbing resin obtained by converting a water-absorbing resin contained in a used absorbent article to a monomer (such as acrylic acid) by a chemical treatment on the water-absorbing resin, and then using the monomer as one of raw materials, in a production process of a (conventional) water-absorbing resin in which a water-absorbing-resin-forming monomer is used as a raw material.

### [1-2-4] Urea removal step

In the first embodiment, the term "urea removal step" is a step of removing, from the water-absorbing resin contained in the used absorbent article, urea that causes deterioration in water absorption physical properties and coloration so as to set a urea content in the water-absorbing resin to 2 mass% or less. The "urea removal step" is not particularly limited, provided that the step uses a method in which urea can be removed. Specific examples of the method include: a method in which urea is hydrolyzed with use of an enzyme, a catalyst, or the like; a method in which urea is removed under reduced pressure; a method in which washing is carried out with use of a water-based liquid or the like (washing treatment); and a method in which a swollen water-absorbing resin is dehydrated (dehydration treatment). Among these treatment methods, from the viewpoint of treatment cost and simplicity, the washing treatment, the dehydration treatment, and the like are preferable methods.

In order to reduce the urea content in the water-absorbing resin in these treatment methods, a well-known method(s) such as using a large amount of washing water and/or increasing the number of times the washing treatment and/or the dehydration treatment is carried out are effective. However, it has been difficult to achieve a urea content of 2 mass% or less, which is the object of an aspect of the present invention. The method in which the washing treatment and the dehydration treatment are used in combination, as described in the Examples of the present application, is one of particularly preferable methods since an urea removal effect is large. The method achieves a urea content of 2 mass% or less.

There is no particular limitation on a lower limit value of the urea content in the water-absorbing resin, and it is found that a smaller urea content is likely to lead to reduction in deterioration of water absorption performance and reduction in coloration. However, even in a case where the urea content is decreased to less than 0.1 mass%, no further improvement effect can be found but cost required for the washing treatment and/or the dehydration treatment increases. Therefore, decreasing the urea content to less than 0.1 mass% is not preferable.

Further, by carrying out the urea removal treatment, impurities originating from human waste other than urea can also be removed simultaneously with urea. Specific examples of such impurities include the following: proteins, carbohydrates, and lipids originating from food residues, which are contained in stool; general bacteria such as enteric bacteria, *E. coli,* and lactic acid bacteria; components such as bile acid, mucin, indole, skatole, phenol, and p-cresol; and uric acid, hippuric acid, ammonia, and creatinine, which are contained in urine.

### [1-2-5] Washing step

In the first embodiment, the washing treatment is a method of the urea removal step. This urea removal step is a step of removing, by means of a water-based liquid such as water or salt water, most of urine which is present between particles of a swollen gel of a water-absorbing resin, on surfaces of the particles of the swollen gel, and/or the like. Specific examples of the method include methods of pouring a water-based liquid on a swollen water-absorbing resin gel, immersing a swollen gel in a water-based liquid, and carrying out stirring at the same as immersing a swollen gel in a water-based liquid.

The water-based liquid is not particularly limited, provided that a urine component is decreased but the water-absorbing resin is not altered by the water-absorbing resin in comparison with the urine component before the washing step. The water-based liquid is preferably a liquid which the water-absorbing resin absorbs to swell. This is because such a water-based liquid makes it easy to remove a human waste component when dehydration is carried out after water absorption and swelling. Examples of the water-based liquid include deionized water, tap water, distilled water, physiological saline, and seawater, and may include another component(s).

As the water-based liquid, a liquid at a temperature from room temperature to a high temperature of up to 100°C can be used, and steam can also be used. In a case where a water-based liquid at a high temperature or steam of the water-based liquid is used, a sterilization effect as well as a washing effect can be expected.

The amount of the water-based liquid used is preferably 2000 parts by weight or more, more preferably 10000 parts by weight or more, and even more preferably 100000 parts by weight or more, relative to 100 parts by weight of the water-absorbing resin.

### [1-2-6] Dehydration step

In the first embodiment, the dehydration step is a method of the urea removal step. This dehydration step is a step of discharging a urine component which is present inside the water-absorbing resin out of a system by shrinking the swollen gel of the water-absorbing resin.

The dehydration step in an embodiment of the present invention is not particularly limited, provided that a treatment that can reduce a moisture content of the water-absorbing resin that has swollen is used. Specific examples of the method include: a method in which the swollen gel of the water-absorbing resin is brought into contact with an aqueous solution containing a hydrophilic organic solvent; a method in which the swollen gel is brought into contact with an aqueous solution having a low pH (e.g., 3 or less); a method in which the swollen gel is brought into contact with an aqueous solution of a polyvalent metal salt such as calcium chloride; and a method in which a voltage is applied to the swollen gel by using a pair of electrodes. Specific examples of bringing the swollen gel of the water-absorbing resin into contact with such a liquid include: pouring the liquid on the swollen gel; immersing the swollen gel in the liquid; and stirring the swollen gel while immersing the swollen gel in the liquid.

In a case where the swollen gel of the water-absorbing resin is immersed in an aqueous solution which contains a hydrophilic organic solvent, a concentration of the hydrophilic organic solvent in the aqueous solution in which the swollen gel is to be immersed is preferably 35 mass% or more, more preferably 40 mass% or more, and even more preferably 45 mass% or more.

The hydrophilic organic solvent is an organic solvent which has a solubility of 20 g or more relative to 100 mL of water at 20°C. The solubility relative to 100 mL of water at 20°C is more preferably 25 g or more and even more preferably 30 g or more.

Examples of such a hydrophilic organic solvent include (1) lower alcohols such as methanol, ethanol, n-propyl alcohol, isopropyl alcohol, and tert-butyl alcohol, (2) ketones such as acetone, and methyl ethyl ketone, (3) ethers such as tetrahydro furan, and dioxane, and (4) esters such as methyl acetate, methyl lactate, and ethyl lactate. One of these hydrophilic organic solvents may be used alone or two or more of the hydrophilic organic solvents may be used in combination.

In a case where the swollen gel of the water-absorbing resin is immersed in an aqueous solution having a low pH (e.g., 3 or less), the pH of the aqueous solution is preferably 3 or less, and more preferably 0.5 to 2.5. In the aqueous solution, either an inorganic acid or an organic acid can be used as an acid. In the case of the inorganic acid, hydrochloric acid, sulfuric acid, and/or the like can be used. In the case of the organic acid, tartaric acid, glycolic acid, malic acid, citric acid, succinic acid, acetic acid, and/or the like can be used. One of these acids may be used alone or two or more of these acids may be used in combination.

In a case where the swollen gel is brought into contact with the aqueous solution of the polyvalent metal salt, examples of the polyvalent metal salt include metal salts of calcium, magnesium, aluminum, iron, cobalt, nickel, and copper. One of these polyvalent metal salts may be used alone or two or more of the polyvalent metal salts may be used in combination.

### [1-2-7] Remaining urea amount

In the first embodiment, impurities originating from human waste which is contained in the water-absorbing resin can be reduced by carrying out the urea removal treatment, and thus coloration of the water-absorbing resin which has been regenerated can be reduced.

It is possible to prevent a deterioration in water absorption performance of the water-absorbing resin and to reduce coloration by setting the remaining amount of urea, which is contained at a large ratio and/or in a large amount among the impurities originating from human waste, to 2 mass% or less, preferably 1.8 mass% or less, and more preferably 1.6 mass% or less. Note that the wording "remaining amount of urea" refers to the urea content in the recycled water-absorbing resin.

There is no particular limitation on a method of quantifying urea which remains in the water-absorbing resin, provided that the urea can be quantified by the method. Examples of the method include a method in which after a water-absorbing resin is dispersed in water and thus urea is extracted in a water layer, the urea contained in the water layer is directly quantified by liquid chromatography, gas chromatography, or the like. Examples of the method of quantifying the urea include a method in which the urea is quantified by a colorimetric method such as the urease indophenol method or the diacetyl monoxime method.

### [1-2-8] Recovery step

In the first embodiment, the recovery step of the recycled water-absorbing resin is a step of recovering the water-absorbing property of the water-absorbing resin after carrying out the urea removal treatment on the water-absorbing resin contained in the used absorbent article.

There is no particular limitation on the recovery treatment, provided that a water-absorbing ability of the water-absorbing resin is recovered by the recovery treatment. Examples of well-known recovery methods that can be used include: a method in which after the water-absorbing resin which has absorbed urine is dehydrated by bringing the water-absorbing resin into contact with the polyvalent metal salt, the water-absorbing resin is treated with an acid liquid, neutralized with an alkali metal salt, and then dried (Japanese Patent Application Publication Tokukai No. 2003-225645); a method in which after the water-absorbing resin which has absorbed urine is dehydrated by bringing the water-absorbing resin into contact with a solution containing a hydrophilic organic solvent, the water-absorbing resin is dried (Japanese Patent Application Publication Tokukai No. 2003-326161); a method in which after the water-absorbing resin which has absorbed urine is dehydrated by bringing the water-absorbing resin into contact with a polyvalent metal salt, the water-absorbing resin is treated with an aqueous alkali metal salt solution, undergoes an ion exchange treatment, and then is dried (Japanese Patent Application Publication Tokukai No. 2013-198862); and a method in which after the water-absorbing resin which has absorbed urine is dehydrated by bringing the water-absorbing resin into contact with an acidic aqueous solution, the water-absorbing resin is neutralized with an alkali metal salt and then dried (Japanese Patent Application Publication Tokukai No. 2019-135046 etc.).

### [1-2-9] Crushing (cutting) step

In the first embodiment, the method for recycling a water-absorbing resin includes, in the urea removal step or before or after the urea removal step, a crushing (cutting) step of crushing (cutting) a used absorbent article into a crushed material (cut material).

A method of crushing (cutting) a used absorbent article is not particularly limited, and includes, for example, a method in which a cutting tool such as a cutter is used for cutting. Carrying out the crushing (cutting) step makes it possible to increase the chance of contact between the water-absorbing resin in the absorbent article and the washing water, a dehydration liquid, and the like. This makes it possible to increase the washing effect, the dehydration effect, the dehydration speed, and the like. Further, the crushing (cutting) step makes it possible to easily separate members such as the water-absorbing resin, pulp, and nonwoven fabric from the used absorbent article.

### [1-2-10] Separation step

In the first embodiment, in the method for recycling a water-absorbing resin, it is possible to carry out a separation step of separating the water-absorbing resin from the used absorbent article, in parallel with the urea removal step and/or the crushing (cutting) step. The wording "separating the water-absorbing resin from the used absorbent article" means: taking out the water-absorbing resin which has shrunken by discharge of the absorbed liquid, through a gap in the pulp, the nonwoven fabric, and/or the like contained in the used absorbent article; and dispersing, in a treatment liquid, the water-absorbing resin thus taken out.

Examples of a method of separating the water-absorbing resin from the used absorbent article include a method in which a mixture of the treatment liquid and the used absorbent article is stirred. The water-absorbing resin which has been dispersed in the treatment liquid can be collected by a conventional solid-liquid separation means for separating a soluble substance and an insoluble substance, such as filtration or centrifugation.

### [1-2-11] Sterilization/disinfection step

In the aforementioned method for recycling a water-absorbing resin, it is possible to carry out a sterilization/disinfection step of sterilizing and/or disinfecting the water-absorbing resin, in parallel with or after the urea removal step and/or the crushing (cutting) step.

Examples of a method of sterilizing and/or disinfecting the water-absorbing resin include a method in which the water-absorbing resin is treated with a disinfecting liquid. The disinfecting liquid is not particularly limited, and a well-known disinfecting liquid can be used. Examples of the disinfecting liquid include an aqueous sodium hypochlorite solution, an aqueous chlorine dioxide solution, ozone water, a hydrogen peroxide solution, and electrolyzed water (acidic electrolyzed water). It is preferable to efficiently mix the water-absorbing resin and the disinfecting agent, for example, by carrying out sterilization/disinfection in a vessel which has a stirring blade or by causing convection of the aqueous solution.

### [1-2-12] "EDANA" and "ERT"

"EDANA" is an acronym of the European Disposables and Nonwovens Association. "ERT" is an acronym of EDANA Recommended Test Methods, which are European standard (de facto international standard) measuring methods for water-absorbing resins. In the first embodiment of the present invention, physical properties of the water-absorbing resin are measured in conformity with the ERT master copy (2002 revised version; known literature) unless otherwise specified.

### [1-2-13] Others

In the present specification, any range of "X to Y" denotes "X or more and Y or less".

In the present specification, "ppm" means "ppm by weight", unless otherwise specifically noted.

In the present specification, "... acid (salt)" means "... acid and/or a salt(s) thereof". "(meth)acrylic" means "acrylic and/or methacrylic".

In the present specification, a unit "liter" of a volume may be denoted as "1" or "L".

In the present specification, the following pairs of words are used as synonyms: "weight" and "mass"; "weight%" and "mass%"; and "parts by weight" and "parts by mass".

### [1-3] Method 2 for recycling water-absorbing resin in accordance with one aspect of first embodiment

An embodiment of the present invention further provides a method for recycling a water-absorbing resin, the method including, as a step, the recycling method (method for producing a recycled water-absorbing resin) in accordance with an aspect of the first embodiment described in [1-2] above.

Specifically, the method for recycling a water-absorbing resin in accordance with an aspect of the first embodiment includes: a urea removal step of removing urea from a swollen gel of the water-absorbing resin contained in a used absorbent article so that a urea content in the recycled water-absorbing resin becomes 2 mass% or less; and a recovery step of recovering a water-absorbing property of the water-absorbing resin after the urea removal step.

Further, a preferred embodiment includes the step of crushing (cutting) a used absorbent article simultaneously with or before or after the urea removal step.

In addition, the separation step of separating the water-absorbing resin from a used absorbent article can be carried out in parallel with the crushing (cutting) step after the urea removal step.

In addition, a treatment in which the water-absorbing resin is sterilized and/or disinfected can be carried out in parallel with or before or after the urea removal step.

According to the method for producing a recycled water-absorbing resin in accordance with an aspect of the first embodiment, it is possible to produce a recycled water-absorbing resin which achieves reduced coloration. Further, reduction in deterioration of the water-absorbing property performance is also achieved.

### <Second embodiment>

### [2-1] Technical idea of second embodiment

In an actual work site for recycling of used absorbent articles, hygienic materials of various kinds, various manufacturers, and the like are gathered together for recycling. Therefore, it is difficult to obtain a recycled water-absorbing resin which has a stable water absorption performance since water-absorbing resins collected from the used absorbent articles are a mixture of water-absorbing resins which are produced by various manufacturers and which have various performances.

Meanwhile, a water-absorbing resin for hygienic materials has a highly adjusted balance of various water absorbent properties such as fluid retention capacity, fluid retention capacity under pressure, and liquid permeability, in order to be adapted to various applications, to meet various requirements, and the like. Therefore, in a case where the water absorbent properties of the recycled water-absorbing resin are unstable, it is very difficult to adjust the water-absorbing resin for hygienic materials to a desired water absorbent property balance.

In light of the above, the inventors of the present invention considered that by mixing, as one of raw materials used in newly producing a water-absorbing resin, a recycled water-absorbing resin which has unstable water absorbent properties as described above, a physical property balance can be easily adjusted. Note that the wording "newly producing a water-absorbing resin" means producing a conventional (normal) water-absorbing resin in which a water-absorbing-resin-forming monomer is used as a raw material. In this case, the conventional (normal) water-absorbing resin includes neither a resin which partially contains a the recycled water-absorbing resin nor a water-absorbing resin which uses, as one of raw materials, a monomer that has been produced by recycling.

Moreover, the inventors of the present invention have found that it is possible to obtain a water-absorbing resin that is better in physical property balance and in reduction of coloration, by using, as the recycled water-absorbing resin, a recycled water-absorbing resin which has undergone a urea removal treatment and which thus has a reduced content of a component that originates from urine, that causes deterioration in water absorption performance, and that causes coloration. As a result, the inventors have completed the second embodiment of the present invention.

### [2-2] Method 1 for producing water-absorbing resin in accordance with one aspect of second embodiment

In an aspect of the second embodiment, the method for producing a water-absorbing resin refers to a production method in which in a step of newly producing a water-absorbing resin, a recycled water-absorbing resin which has been subjected to the urea removal treatment and then to a recovery treatment is used as one of raw materials so that the urea content becomes 2 mass% or less. The wording "newly producing a water-absorbing resin" means producing a conventional water-absorbing resin in which a water-absorbing-resin-forming monomer is used as a raw material. Further, the step is any of an aqueous monomer solution preparation step, a polymerization step, a hydrogel-crushing step, a drying step, and a surface-crosslinking step.

### [2-2-1] Absorbent article

In the second embodiment, for the definition of "absorbent article", the definition in "[1-2-1] Absorbent article" of the first embodiment described above is referred to.

### [2-2-2] Water-absorbing resin

In the second embodiment, for the definition of "water-absorbing resin", the definition in "[1-2-2] Water-absorbing resin" of the first embodiment described above is referred to.

### [2-2-3] Recycled water-absorbing resin

In the second embodiment, for the definition of "recycled water-absorbing resin", the definition in "[1-2-3] Recycled water-absorbing resin" of the first embodiment described above is referred to.

### [2-2-4] Urea removal step

In the second embodiment, for the definition of "urea removal step", the definition of "[1-2-4] Urea removal step" of the first embodiment described above is referred to.

### [2-2-5] Washing step

In the second embodiment, for the definition of "washing step", the definition of "[1-2-5] Washing step" of the first embodiment described above is referred to.

### [2-2-6] Dehydration step

In the second embodiment, for the definition of "dehydration step", the definition of "[1-2-6] Dehydration step" of the first embodiment described above is referred to.

### [2-2-7] Remaining urea amount

In the second embodiment, for the definition of "remaining urea amount", the definition of "[1-2-7] Remaining urea amount" of the first embodiment described above is referred to.

### [2-2-8] Recovery step

In the second embodiment, for the definition of "recovery step", the definition of "[1-2-8] Recovery step" of the first embodiment described above is referred to.

### [2-2-9] Crushing (cutting) step

In the second embodiment, for the definition of "crushing (cutting) step", the definition of "[1-2-9] Crushing (cutting) step" of the first embodiment described above is referred to.

### [2-2-10] Separation step

In the second embodiment, for the definition of "separation step", the definition of "[1-2-10] Separation step" of the first embodiment described above is referred to.

### [2-2-11] Sterilization/disinfection step

In the second embodiment, for the definition of "sterilization/disinfection step", the definition of "[1-2-11] Sterilization/disinfection step" of the first embodiment described above is referred to.

### [2-2-12] Aqueous monomer solution preparation step

This step is a step of preparing an aqueous solution (hereinafter, referred to as "aqueous monomer solution") which contains an acrylic acid (salt) as a main component. Note that a monomer slurry liquid can be used within a range in which the water absorption performance of a water-absorbing resin to be obtained does not deteriorate. However, for convenience, this section discusses the aqueous monomer solution.

Further, the above "main component" means that the amount (content) of the acrylic acid (salt) used is ordinarily 50 mol% or more, preferably 70 mol% or more, and more preferably 90 mol% or more (upper limit is 100 mol%) relative to a total amount of monomers (excluding an internal crosslinking agent) which are subjected to a polymerization reaction of the water-absorbing resin.

### (Acrylic acid)

In an embodiment of the present invention, from the viewpoint of physical properties and productivity of a water-absorbing resin to be obtained, the acrylic acid and/or a salt thereof (hereinafter, referred to as "acrylic acid (salt)") is used as a water-absorbing-resin-forming monomer.

The above "acrylic acid" may be a well-known acrylic acid. The "acrylic acid" may include, from the viewpoint of polymerizability of the acrylic acid and color of the water-absorbing resin, a polymerization inhibitor in an amount of preferably 200 ppm or less, more preferably 10 ppm to 160 ppm, and even more preferably 20 ppm to 100 ppm. The polymerization inhibitor is preferably a methoxyphenol, and more preferably p-methoxyphenol. Further, as an impurity in the acrylic acid, the compound disclosed in U.S. Patent Application Publication No. 2008/0161512 is also applicable to an embodiment of the present invention.

Further, the above "acrylic acid salt" is a product of neutralization of the above acrylic acid with a basic composition described below. The acrylic acid salt may be a commercially available acrylic acid salt (e.g., sodium acrylate), or may be a salt obtained by neutralization in a production plant for a water-absorbing resin.

### (Basic composition)

In an embodiment of the present invention, the term "basic composition" refers to a composition which contains a basic compound. The "basic composition" is, for example, a commercially available aqueous sodium hydroxide solution.

Specific examples of the basic compound include a carbonate salt and/or a hydrocarbon salt of an alkali metal, a hydroxide of an alkali metal, ammonia, and an organic amine. Among these compounds, the basic compound is preferably a strongly basic compound from the viewpoint of physical properties of a water-absorbing resin to be obtained. In other words, the basic compound is preferably a hydroxide of an alkali metal such as sodium hydroxide, potassium hydroxide, and lithium hydroxide, and more preferably, sodium hydroxide.

### (Neutralization)

As neutralization in an embodiment of the present invention, it is possible to select one or use a combination of both of the following: neutralization (before polymerization) of an acrylic acid; and neutralization (after polymerization) of a crosslinked hydrogel polymer which is obtained by crosslinking the acrylic acid (hereinafter, referred to as "post-neutralization"). Further, although the neutralization can be of a continuous type or a batch type and is not particularly limited, neutralization of a continuous type is preferable from the viewpoint of production efficiency or the like.

In a case where the recycled water-absorbing resin is used as one of raw materials for producing a water-absorbing resin, the recycled water-absorbing resin may contain a basic compound. Thus, the basic compound neutralizes the acrylic acid before polymerization or a crosslinked hydrogel polymer after polymerization. Therefore, as described later, a neutralization rate of the acrylic acid and a neutralization rate of the water-absorbing resin as an end product are each adjusted to be within a predetermined range in consideration of the basic compound.

Note that for conditions such as a neutralizing device, a neutralizing temperature, and a retention time, the conditions described in International Publication No. WO 2009/123197, U.S. Patent Application Publication No. 2008/0194863, and the like are applicable to an embodiment of the present invention.

The neutralization rate in an embodiment of the present invention is preferably 10 mol% to 90 mol%, more preferably 40 mol% to 85 mol%, even more preferably 50 mol% to 80 mol%, and particularly preferably 60 mol% to 75 mol% relative to an acid group(s) of a monomer(s). In a case where the neutralization rate is less than 10 mol%, a fluid retention capacity may be significantly decreased. On the other hand, in a case where the neutralization rate is more than 90 mol%, a water-absorbing resin which has a high fluid retention capacity under pressure may not be obtained. Note that for example, a neutralization rate of 75 mol% means a mixture of 25 mol% of acrylic acid and 75 mol% of an acrylic acid salt. Further, the mixture may also be referred to as a partially neutralized acrylic acid product.

The above neutralization rate also applies to the case of post-neutralization. Further, the above neutralization rate is also applied to the neutralization rate of the water-absorbing resin as an end product. An embodiment of the present invention is characterized in that the recycled water-absorbing resin is used as one of raw materials for producing a water-absorbing resin. In a case where the recycled water-absorbing resin contains the basic compound described above, the neutralization (before polymerization) of the acrylic acid and/or the post-neutralization of the crosslinked hydrogel polymer is adjusted as appropriate so that the neutralization rate of the water-absorbing resin as an end product falls in a predetermined range, in consideration of the basic compound.

### (Other monomer(s))

In an embodiment of the present invention, the term "other monomer(s)" refers to a monomer excluding the above acrylic acid (salt). It is possible to produce a water-absorbing resin by using the "other monomer(s)" in combination with the acrylic acid (salt).

Such another monomer described above includes a water-soluble or hydrophobic unsaturated monomer. Specifically, the compound (note that acrylic acid is excluded) disclosed in U.S. Patent Application Publication No. 2005/0215734 is also applicable to an embodiment of the present invention.

### (Internal crosslinking agent)

As the internal crosslinking agent used in an embodiment of the present invention, the compounds disclosed in U.S. Patent No. 6241928 are also applicable to an embodiment of the present invention. From among these compounds, one kind or two or more kinds of compounds are selected in consideration of reactivity.

Further, from the viewpoint of water absorption performance and the like of a water-absorbing resin to be obtained, preferably, a compound which has two or more polymerizable unsaturated groups is used as the internal crosslinking agent. The internal crosslinking agent used is more preferably a compound which has a pyrolytic property at a drying temperature described below, and even more preferably a compound which includes two or more polymerizable unsaturated groups and which has a (poly)alkylene glycol structural unit.

The polymerizable unsaturated groups are each preferably an allyl group or a (meth)acrylate group, and more preferably a (meth)acrylate group. Further, preferably, polyethylene glycol is used as the above-described (poly)alkylene glycol structural unit, and the number n of structural units is preferably 1 to 100, and more preferably 6 to 50.

The amount of the internal crosslinking agent used is preferably 0.0001 mol% to 10 mol% and more preferably 0.001 mol% to 1 mol% relative to the total amount of monomers. It is possible to obtain a desired water-absorbing resin by setting the amount of the internal crosslinking agent used within the above range. Note that an excessively small amount of the internal crosslinking agent used results in a decreased gel strength and tends to consequently increase a water-soluble content whereas an excessively large amount of the internal crosslinking agent tends to result in a decreased fluid retention capacity, and thus the excessively small amount and the excessively large amount are not preferable. Note that the mol% relative to the total amount of monomers is a percentage of the number of moles of the internal crosslinking agent relative to the total number of moles of monomers contained in the aqueous monomer solution.

In an embodiment of the present invention, the following method is preferably applied: a method in which a predetermined amount of the internal crosslinking agent is added to an aqueous monomer solution in advance and a crosslinking reaction is carried out simultaneously with polymerization. In addition to the above method, it is possible to employ, for example, a method in which the internal crosslinking agent is added during and/or after the polymerization so that post-crosslinking is carried out; a method in which radical crosslinking is carried out with use of a radical polymerization initiator; and/or a method in which radiation crosslinking is carried out with use of an active energy ray such as an electron ray or an ultraviolet ray. Further, it is possible to use two or more of the above methods in combination.

### (Other substance(s) added to aqueous monomer solution)

In an embodiment of the present invention, substances described below can also be added during preparation of the aqueous monomer solution from the viewpoint of improvement of physical properties of a water-absorbing resin to be obtained.

Specifically, it is possible to add, for example: a hydrophilic polymer(s) such as starch, a starch derivative, cellulose, a cellulose derivative, polyvinyl alcohol, a polyacrylic acid (salt), and/or a crosslinked polyacrylic acid (salt), in an amount of preferably 50 mass% or less, more preferably 20 mass% or less, even more preferably 10 mass% or less, and particularly preferably 5 mass% or less (lower limit is 0 mass%); and a blowing agent(s) such as a carbonate and/or an azo compound, a surfactant, a chelating agent, a chain transfer agent, and/or the like, in an amount of preferably 5 mass% or less, more preferably 1 mass% or less, and even more preferably 0.5 mass% or less (lower limit is 0 mass%).

The above substances are not necessarily added to the aqueous monomer solution, but can be added during the polymerization, or can be added both to the aqueous monomer solution and during the polymerization.

Note that in a case where a water-soluble resin or a water-absorbing resin is used as the hydrophilic polymer, a graft polymer or a water-absorbing resin composition (e.g., starch-acrylic acid polymer, PVA-acrylic acid polymer, etc.) is obtained. These polymers and water-absorbing resin compositions are also encompassed in the scope of the present invention.

### [2-2-13] Polymerization step

This step is a step of polymerizing an acrylic acid (salt)-based aqueous monomer solution obtained in the aqueous monomer solution preparation step, so that a crosslinked hydrogel polymer (hereinafter referred to as "hydrogel") is obtained.

### (Polymerization initiator)

The polymerization initiator used in an embodiment of the present invention is not particularly limited since the polymerization initiator is selected as appropriate in accordance with the form of polymerization, or the like. Examples of the polymerization initiator include a pyrolysis-type polymerization initiator, a photolytic-type polymerization initiator, and a redox-type polymerization initiator which is used in combination with a reducing agent that facilitates decomposition of the pyrolysis-type polymerization initiator and the photolytic-type polymerization initiator. Specifically, one or more of the polymerization initiators disclosed in U.S. Patent No. 7265190 can be used as the polymerization initiator. Note that from the viewpoint of the handleability of the polymerization initiator, the physical properties of the water-absorbing resin, and/or the like, the polymerization initiator is preferably a peroxide or an azo compound, more preferably a peroxide, and even more preferably a persulfate.

The amount of the polymerization initiator used is preferably 0.001 mol% to 1 mol% and more preferably 0.001 mol% to 0.5 mol% relative to the monomer(s). Further, the amount of the reducing agent used is preferably 0.0001 mol% to 0.02 mol% relative to the monomer(s). Note that the mol% relative to the monomer(s) is a percentage of the number of moles of the reducing agent relative to the total number of moles of monomers contained in the aqueous monomer solution.

Note that in place of the above polymerization initiator, the polymerization reaction may be carried out by irradiation with an active energy ray such as a radial ray, an electron beam, or an ultraviolet ray, or the polymerization initiator may be used in combination with any of these active energy rays.

### (Form of polymerization)

The form of polymerization which is applied to an embodiment of the present invention is not particularly limited. From the viewpoint of the water absorbent property, easy control of polymerization, and the like, preferable examples of the form of polymerization include spray droplet polymerization, aqueous solution polymerization, and reversed phase suspension polymerization, more preferable examples of the form of polymerization include aqueous solution polymerization and reverse phase suspension polymerization, and even more preferable examples of the form of polymerization include aqueous solution polymerization. Among others, continuous aqueous solution polymerization is particularly preferable, and can be any one of continuous belt polymerization and continuous kneader polymerization.

As specific forms of polymerization, the continuous belt polymerization is disclosed in, for example, U.S. Patent Nos. 4893999 and 6241928, and U.S. Patent Application Publication No. 2005/215734, and the continuous kneader polymerization is disclosed in, for example, U.S. Patent Nos. 6987151 and 6710141. By employing these forms of continuous aqueous solution polymerization, it is possible to improve efficiency of production of the water-absorbing resin.

Further, preferable examples of a form of the continuous aqueous solution polymerization include "high-temperature initiated polymerization" and "high-concentration polymerization". The term "high-temperature initiated polymerization" refers to a form in which the temperature of an aqueous monomer solution is set to preferably 30°C or more, more preferably 35°C or more, even more preferably 40°C or more, and particularly preferably 50°C or more (upper limit is the boiling point) when the polymerization is started. The "high-concentration polymerization" refers to a form of polymerization in which polymerization is carried out while a monomer concentration is set to preferably 30 mass% or more, more preferably 35 mass% or more, even more preferably 40 mass% or more, and particularly preferably 45 mass% or more (upper limit is a saturated concentration). It is possible to use these forms of polymerization in combination.

In an embodiment of the present invention, polymerization can be carried out in an air atmosphere. From the viewpoint of color of a water-absorbing resin to be obtained, polymerization is carried out preferably in an atmosphere of inert gas such as nitrogen or argon. In such a case, an oxygen concentration is preferably controlled to be, for example, 1 volume% or less. Note that it is preferable to also replace dissolved oxygen in an aqueous monomer solution with inert gas (e.g., dissolved oxygen: less than 1 mg/l).

Alternatively, in an embodiment of the present invention, the form of polymerization can be foaming polymerization in which polymerization is carried out while gas bubbles (particularly the inert gas or the like) are dispersed into an aqueous monomer solution.

### [2-2-14] Hydrogel-crushing step

This step is a step of hydrogel-crushing a hydrogel, which has been obtained by the polymerization step, with use of, for example, a kneader, a screw extruder such as a meat chopper, or a gel-crusher such as a cutter mill in order to obtain a hydrogel in the form of particles (hereinafter referred to as "particulate hydrogel"). Note that in a case where the polymerization step is carried out through kneader polymerization, the polymerization step and the gel-crushing step are carried out simultaneously. Further, in a case where the particulate hydrogel is directly obtained through a polymerization process, such as vapor phase polymerization or reversed phase suspension polymerization, the gel-crushing step may not be carried out.

With regard to gel-crushing conditions and forms other than above described, any of conditions and forms disclosed in International Publication No. WO 2011/126079 can be preferably employed in an embodiment of the present invention.

### [2-2-15] Drying step

This step is a step of drying the particulate hydrogel, which has been obtained by the polymerization step and/or the hydrogel-crushing step, until a desired resin solid content is attained, and thus obtaining a dried polymer. The resin solid content is calculated from drying loss (a change in mass after heating 1 g of the water-absorbing resin at 180°C for three hours). The resin solid content is preferably 80 mass% or more, more preferably in a range of 85 mass% to 99 mass%, even more preferably in a range of 90 mass% to 98 mass%, and especially even more preferably in a range of 92 mass% to 97 mass%.

A drying method of drying the particulate hydrogel is not particularly limited. Examples of the drying method include thermal drying, hot air drying, drying under reduced pressure, fluidized bed drying, infrared drying, microwave drying, drum dryer drying, drying by azeotropic dehydration with a hydrophobic organic solvent, and high humidity drying by use of high temperature water vapor. The drying method is, among others, preferably hot air drying, more preferably band drying, in which hot air drying is performed on a through-flow belt, from the viewpoint of drying efficiency.

From the viewpoint of, for example, the color of a water-absorbing resin to be produced and drying efficiency, the hot air drying is performed at a drying temperature (temperature of hot air) of preferably 120°C to 250°C, more preferably 150°C to 200°C. Note that drying conditions other than the drying temperature (e.g., the air velocity of hot air and the drying time) can be set as appropriate in accordance with moisture content of the particulate hydrogel to be dried, total weight of the particulate hydrogel to be dried, and a desired resin solid content. When band drying is carried out, the various conditions disclosed in, for example, International Publication Nos. WO 2006/100300, WO 2011/025012, WO 2011/025013, and WO 2011/111657 can be applied, as necessary, as drying conditions.

Setting the drying temperature, the drying time, and the like described above within the above ranges makes it possible to obtain a water-absorbing resin whose fluid retention capacity (CRC), water-soluble content (Ext), and color are within desired ranges.

### [2-2-16] Surface-crosslinking step

This step is a step of forming a portion with a higher crosslinking density in a surface layer (that is, a portion of water-absorbing resin powder which is up to several tens of micrometers deep from the surface) of the water-absorbing resin powder produced through the above steps. This step includes a mixing step, a heat treatment step, and (optionally) a cooling step.

In the surface-crosslinking step, a water-absorbing resin (water-absorbing resin particles) can be obtained which has been surface-crosslinked by radical crosslinking, surface polymerization, crosslinking reaction with a surface-crosslinking agent, or the like on the surface of the water-absorbing resin powder.

### (Surface-crosslinking agent)

A surface-crosslinking agent used in an embodiment of the present invention is not limited to any particular one. Examples of the surface-crosslinking agent include an organic surface-crosslinking agent and an inorganic surface-crosslinking agent. Among others, an organic surface-crosslinking agent that is reactive with a carboxyl group is preferable, from the viewpoint of, for example, the physical properties of a water-absorbing resin and the handleability of the surface-crosslinking agent. For example, one of the surface-crosslinking agents disclosed in U.S. Patent No. 7183456 can be used, or two or more of the surface-crosslinking agents disclosed in U.S. Patent No. 7183456 can be used. Specifically, examples of the surface-crosslinking agent encompass a polyhydric alcohol compound, an epoxy compound, a haloepoxy compound, a polyamine compound, a condensed product with a haloepoxy compound of the polyamine compound, an oxazoline compound, an oxazolidinone compound, a polyvalent metal salt, an alkylene carbonate compound, a cyclic urea compound, and the like.

An amount of the surface-crosslinking agent used (or a total amount used in a case where a plurality of surface-crosslinking agents are used) is preferably 0.01 parts by mass to 10 parts by mass, more preferably 0.01 parts by mass to 5 parts by mass, relative to 100 parts by mass of the water-absorbing resin powder. The surface-crosslinking agent is preferably added as an aqueous solution. In such a case, an amount of water used is preferably 0.1 parts by mass to 20 parts by mass, and more preferably 0.5 parts by mass to 10 parts by mass, relative to 100 parts by mass of the water-absorbing resin powder. In a case where a hydrophilic organic solvent is used according to need, an amount of the hydrophilic organic solvent used is preferably 10 parts by mass or less, and more preferably 5 parts by mass or less, relative to 100 parts by mass of the water-absorbing resin powder.

It is possible, for example, to mix additives, which are added in a "remoistening step" described below, with the surface-crosslinking agent (aqueous solution) by adding each of the additives in a range of 5 parts by mass or less, or alternatively, to add the additives separately from the surface-crosslinking agent in the mixing step described below.

### (Mixing step)

This step is a step of mixing the water-absorbing resin powder and the surface-crosslinking agent. A method of mixing the surface-crosslinking agent is not limited to a particular one and can be, for example, a method in which a surface-crosslinking agent solution is prepared in advance, and the surface-crosslinking agent solution is mixed with the water-absorbing resin powder preferably by spraying or dropping the surface-crosslinking agent solution onto the water-absorbing resin powder, more preferably by spraying the surface-crosslinking agent solution onto the water-absorbing resin powder.

The above mixing may be performed with use of any device. The device is preferably a high-speed stirring mixer, more preferably a high-speed stirring continuous mixer.

### (Heat treatment step)

This step is a step of heating a mixture, which has been discharged in the mixing step, so as to cause crosslinking reaction on a surface of the water-absorbing resin powder.

A device for performing the crosslinking reaction is not limited to any particular one, and can be preferably a paddle dryer. A reaction temperature in the crosslinking reaction is set as appropriate according to a type of the surface-crosslinking agent used, and is preferably 50°C to 300°C and more preferably 100°C to 200°C.

### (Cooling step)

This step is an optional step which is provided after the heat treatment step if needed. A device for carrying out the cooling is not limited to a particular one and is preferably a device whose specification is identical with that of a device used in the heat treatment step, and more preferably a paddle dryer. This is because such a device can be used as a cooling device by replacing a heating medium with a refrigerant. Note that, according to need, the water-absorbing resin particles obtained in the heat treatment step are forced to cool in the cooling step to a temperature preferably of 40°C to 80°C, and more preferably of 50°C to 70°C.

### [2-3] Method 2 for producing water-absorbing resin in accordance with one aspect of second embodiment

An embodiment of the present invention further provides another method for producing a water-absorbing resin in accordance with an aspect of the second embodiment described in [2-2] above.

Specifically, the method for producing a water-absorbing resin according to an aspect of the second embodiment refers to a production method in which in a step of producing a water-absorbing resin, a recycled water-absorbing resin which has been subjected to the urea removal treatment and then to the recovery treatment is used as one of raw materials so that the urea content becomes 2 mass% or less in the recycled water-absorbing resin. Further, the step is one selected from the group consisting of an aqueous monomer solution preparation step, a polymerization step, a hydrogel-crushing step, a drying step, and a surface-crosslinking step.

Examples of a method of adding the recycled water-absorbing resin include: a method in which the recycled water-absorbing resin is added as it is, a method in which the recycled water-absorbing resin is added in a swollen gel state in which the recycled water-absorbing resin is swollen with water, and a method in which the recycled water-absorbing resin is added in a state in which the recycled water-absorbing resin is dispersed in water

In a case where the recycled water-absorbing resin is added in the "aqueous monomer solution preparation step", the recycled water-absorbing resin may be mixed with the aqueous monomer solution, or may be mixed with another raw material(s) after the recycled water-absorbing resin is mixed with water in advance. From the viewpoint of uniform mixability of raw materials, it is preferable to mix the recycled water-absorbing resin in the aqueous monomer solution.

In a case where the recycled water-absorbing resin is added in the "polymerization step", the recycled water-absorbing resin may be added before or after the start of polymerization. From the viewpoint of uniformity of a polymer component, it is preferable to add the recycled water-absorbing resin before the start of the polymerization.

In a case where the recycled water-absorbing resin is added in the "gel-crushing step", the recycled water-absorbing resin may be added before or during crushing. Further, the recycled water-absorbing resin may be split into portions and introduced separately. From the viewpoint of uniformity of a gel component, it is preferable to add the recycled water-absorbing resin before the gel crushing.

In a case where the recycled water-absorbing resin is added in the "drying step", the hydrogel and the recycled water-absorbing resin may be mixed together before drying, or may be dried without mixing. In a case where a powder of the recycled water-absorbing resin and the hydrogel of the recycled water-absorbing resin are mixed together before drying, moisture of the hydrogel is transferred to the powder of the recycled water-absorbing resin. Therefore, mixing before drying is preferable since effects such as increase of the drying rate and reduction in generation of undried gel can be expected.

In a case where the recycled water-absorbing resin is added in the "surface-crosslinking step", a dried material of the water-absorbing resin and the recycled water-absorbing resin may be mixed together before processing, or may be processed without mixing. From the viewpoint of uniform mixability between the surface treatment liquid and the water-absorbing resin, it is preferable to use powdered recycled water-absorbing resin and handle everything in a powder form.

The recycled water-absorbing resin accounts for 1 mass% to 60 mass%, is preferably 1 mass% to 50 mass%, more preferably 1 mass% to 40 mass%, and even more preferably 1 mass% to 30 mass% relative to all raw materials of the water-absorbing resin. Note that the expression "all raw materials of the water-absorbing resin" refers to all raw materials used in a production process of the water-absorbing resin. Examples of the raw materials include: an acrylic acid (salt); a basic composition; other monomer(s); an internal crosslinking agent; a substance (e.g., starch) which is added to the aqueous monomer solution; a polymerization initiator; and a surface-crosslinking agent. The "production process of the water-absorbing resin" includes the aqueous monomer solution preparation step, the polymerization step, the hydrogel-crushing step, the drying step, and the surface-crosslinking step described in the above [2-2]. The above ratio is a percentage of the mass of a solid content of the recycled water-absorbing resin relative to a total mass of a solid content of all the raw materials of the water-absorbing resin and the solid content of the recycled water-absorbing resin.

According to the method for producing a water-absorbing resin in accordance with an aspect of the second embodiment, it is possible to produce a water-absorbing resin which achieves, due to the recycled water-absorbing resin mixed, reduced deterioration of water absorption performance and reduced coloration.

### <Third embodiment>

### [3-1] Technical idea of third embodiment

In the second embodiment, the inventors of the present invention have described that it is possible to obtain a water-absorbing resin that is better, for example, in physical property balance and in reduction of coloration, by mixing and using a recycled water-absorbing resin which has been subjected to a recovery treatment subsequent to a urea removal treatment as one of raw materials used in newly producing a water-absorbing resin. Note that the term "newly producing a water-absorbing resin" means producing a conventional water-absorbing resin in which a water-absorbing-resin-forming monomer is used as a raw material.

However, in a case where the recycled water-absorbing resin is used as one of raw materials for producing a water-absorbing resin, the recycled water-absorbing resin absorbs moisture in the raw materials. Then, the mixture material has an increased viscosity. As a result, problems such as deterioration in handleability of the mixture material and lack of uniformity of the mixture material may occur. In light of the above, the inventors of the present invention have found that it is possible to resolve the problems such as deterioration in the handling of the mixture material and the lack of uniformity of the mixture material, by carrying out a solubilizing treatment on the recycled water-absorbing resin so as to cause the recycled water-absorbing resin to be a water-soluble polymer and thus significantly reducing the viscosity of the mixture material.

Further, this solubilizing treatment can be applied not only to the recycled water-absorbing resin, but also to an intermediate product of the recycled water-absorbing resin after the urea removal treatment or to a used water-absorbing resin after the urea removal treatment. In other words, the following materials are used as one of raw materials used in newly producing the water-absorbing resin: a recycled water-absorbing resin which has undergone the recovery treatment after urea has been removed so that the urea content becomes 2 mass% or less; an intermediate product of the recycled water-absorbing resin after the urea removal treatment; or a used water-absorbing resin after the urea removal treatment. The inventors of the present invention have found that this makes it possible to obtain a water-absorbing resin which is better in physical property balance and reduction in coloration. Consequently, the inventors have completed the third embodiment of the present invention.

Note that the "intermediate product of the recycled water-absorbing resin after the urea removal treatment" and the "used water-absorbing resin after the urea removal treatment" will be described later.

### [3-2] Method 1 for producing recycled water-absorbing resin in accordance with one aspect of third embodiment

In an aspect of the third embodiment, the method for producing a water-absorbing resin includes a solubilization step of obtaining a water-soluble polymer by carrying out a solubilizing treatment on: a recycled water-absorbing resin which has undergone the recovery treatment after having undergone the urea removal treatment so that the urea content becomes 2 mass% or less; an intermediate product of the recycled water-absorbing resin after the urea removal treatment; or a used water-absorbing resin after the urea removal treatment. The aforementioned method for producing a water-absorbing resin is a method for producing a water-absorbing resin which further uses, as one of raw materials, the water-soluble polymer in one step selected from the group consisting of an aqueous monomer solution preparation step, a polymerization step, a hydrogel-crushing step, a drying step, and a surface-crosslinking step in producing the water-absorbing resin.

### (3-2-1) Absorbent article

In the third embodiment, for the definition of the term "absorbent article", the definition of "[1-2-1] Absorbent article" in the first embodiment described above is referred to.

### [3-2-2] Water-absorbing resin

In the third embodiment, for the definition of "water-absorbing resin", the definition in "[1-2-2] Water-absorbing resin" of the first embodiment described above is referred to.

### [3-2-3] Recycled water-absorbing resin

In the third embodiment, for the definition of "recycled water-absorbing resin", the definition in "[1-2-3] Recycled water-absorbing resin" of the first embodiment described above is referred to.

### [3-2-4] Intermediate product of recycled water-absorbing resin after urea removal treatment

In the third embodiment, the term "intermediate product of recycled water-absorbing resin after urea removal treatment" refers to a product which is obtained in a stage during the recovery step carried out for producing the above-described "recycled water-absorbing resin".

Specifically, for example, in a case where the method disclosed in Japanese Patent Application Publication Tokukai No. 2003-225645 is used as a recovery method, the "intermediate product of recycled water-absorbing resin after urea removal treatment" is one of i) to iii).
i) A hydrogel which has been treated with an acidic liquid (but which has not yet been subjected to a neutralization treatment or a drying treatment) after the urea removal treatment on a water-absorbing resin in a used absorbent article (dehydration by bringing the water-absorbing resin in contact with a polyvalent metal salt).
ii) A water-absorbing resin having been treated with an acid liquid treatment and further having been subjected to a drying treatment after the urea removal treatment (the neutralization treatment has not yet been carried out).
iii) A water-absorbing resin having been treated with an acid liquid and further having been subjected to a neutralization treatment after the urea removal treatment (the drying treatment has not yet been carried out).

Note that the method disclosed in the aforesaid Japanese Patent Application Publication Tokukai No. 2003-225645 is a method in which after the polyvalent metal salt is brought into contact with the water-absorbing resin which has absorbed urine and dehydration is carried out, the water-absorbing resin is treated with an acid liquid, neutralized with an alkali metal salt, and then dried.

### [3-2-5] Used water-absorbing resin after urea removal treatment

In the third embodiment, the expression "used water-absorbing resin after urea removal treatment" means a urea removal treatment (urea removal step) carried out on a water-absorbing resin which has been collected from a used absorbent article (water-absorbing resin contained in the used absorbent article).

### [3-2-6] Urea removal step

In the third embodiment, for the definition of "urea removal step", the definition of "[1-2-4] Urea removal step" of the first embodiment described above is referred to.

### [3-2-7] Washing step

In the third embodiment, for the definition of "washing step", the definition of "[1-2-5] Washing step" of the first embodiment described above is referred to.

### (3-2-8) Dehydration step

In the third embodiment, for the definition of "dehydration step", the definition of "[1-2-6] Dehydration step" of the first embodiment described above is referred to.

### [3-2-9] Remaining urea amount

In the third embodiment, for the definition of "remaining urea amount", the definition of "[1-2-7] Remaining urea amount" of the first embodiment described above is referred to.

### [3-2-10] Recovery step

In the third embodiment, for the definition of "recovery step", the definition of "[1-2-8] Recovery step" of the first embodiment described above is referred to.

### [3-2-11] Solubilization step

In the third embodiment, the solubilization step is a treatment step of obtaining a water-soluble polymer by solubilizing, in water, the water-absorbing resin contained in the used absorbent article and/or the recycled water-absorbing resin. The water-soluble polymer which has been obtained in the solubilization step may be a water-soluble polymer entirely solubilized in water or a partially solubilized product which contains a polymer that has not been partially solubilized.

There is no particular limitation on a method of solubilizing the water-absorbing resin, provided that the water-absorbing resin can be decomposed and solubilized in water by the method. Examples of the method include the following: a method in which a water-absorbing resin is decomposed and solubilized with use of a reducing agent and a transition-metal ion(s) (Japanese Patent Application Publication Tokukai No. 2019-131789); a method in which a water-soluble resin is solubilized with use of an ascorbic acid that is a reducing agent under a condition of pH 4 to pH 7.5 (Japanese Patent No. 3146053); a method in which a water-absorbing resin is solubilized by heating treatment in the presence of an oxidizer (Japanese Patent No. 3091251); a method in which a water-absorbing resin is solubilized with use of chlorine dioxide under an acidic condition (Japanese Patent Application Publication Tokukai No. 2019-108639); a method in which a water-absorbing resin is solubilized with use of hydrogen peroxide (Japanese Patent Application Publication Tokukai No. 2019-108640); and a method in which a water-absorbing resin is solubilized with ozone water which contains ozone (Japanese Patent Application Publication Tokukai No. 2019-085343, etc.).

The water-soluble polymer thus obtained may be directly used as an aqueous solution or may be dried into a solid material before use.

From the viewpoint of handleability of an aqueous polymer solution and mixability with another raw material, a lower molecular weight of the water-soluble polymer is preferable. However, from the viewpoint of, for example, a water absorbent property balance of the water-absorbing resin and a reduction in soluble component, a larger molecular weight is preferable. In view of the balance of both of the above, the weight average molecular weight is preferably 1 to 1,000,000, more preferably 2 to 800,000, even more preferably 3 to 600,000.

### [3-2-12] Aqueous monomer solution preparation step

In the third embodiment, for the definition of "aqueous monomer solution preparation step", the definition of "[2-2-12] Aqueous monomer solution preparation step" of the second embodiment described above is referred to.

### [3-2-13] Polymerization step

In the third embodiment, for the definition of "polymerization step", the definition of "[2-2-13] Polymerization step" of the second embodiment described above is referred to.

### (3-2-14) Hydrogel-crushing step

In the third embodiment, for the definition of "hydrogel-crushing step", the definition of "[2-2-14] Hydrogel-crushing step" of the second embodiment described above is referred to.

### [3-2-15] Drying step

In the third embodiment, for the definition of "drying step", the definition of "[2-2-15] Drying step" of the second embodiment described above is referred to.

### [3-2-16] Surface-crosslinking step

In the third embodiment, for the definition of "surface-crosslinking step", the definition of "[2-2-16] Surface-crosslinking step" of the second embodiment described above is referred to.

### [3-3] Method 2 for producing water-absorbing resin in accordance with one aspect of third embodiment

An embodiment of the present invention further provides a method for producing a water-absorbing resin in accordance with an aspect of the second embodiment as described in the above [3-2] above.

Specifically, in an aspect of the third embodiment, the method for producing a water-absorbing resin includes a solubilization step of obtaining a water-soluble polymer by carrying out a solubilizing treatment on: a recycled water-absorbing resin which has undergone the recovery treatment after the urea removal treatment so that the urea content becomes 2 mass% or less; an intermediate product of the recycled water-absorbing resin after the urea removal treatment; or a used water-absorbing resin after the urea removal treatment. The aforementioned method for producing a water-absorbing resin uses, as one of raw materials, the water-soluble polymer in one step selected from the group consisting of the aqueous monomer solution preparation step, the polymerization step, the hydrogel-crushing step, the drying step, and the surface-crosslinking step in producing the water-absorbing resin.

Examples of a method of adding, in the step, a water-soluble polymer obtained by solubilization include: a method in which the water-soluble polymer obtained by solubilization is added as an aqueous solution; a method in which the water-soluble polymer obtained by solubilization is once dried and added as a powder; and a method in which the water-soluble polymer obtained by solubilization is added as a slurry in which an undissolved material partially remains. Note that in a case where the water-soluble polymer obtained by solubilization contains a basic compound, the neutralization rate of the monomer and the neutralization rate of the water-absorbing resin as an end product are considered to change when the polymer is added. Therefore, in consideration of the amount of the basic compound which is contained in the water-soluble polymer obtained by solubilization, the neutralization rate of the monomer and the neutralization rate of the water-absorbing resin of the end product is adjusted so as to fall within a predetermined range.

In a case where the water-soluble polymer obtained by solubilization is added in the "aqueous monomer solution preparation step", the water-soluble polymer obtained by solubilization may be mixed in the aqueous monomer solution or alternatively, a mixture obtained in advance by mixing, with water, the water-soluble polymer obtained by solubilization may be mixed with another raw material. From the viewpoint of uniform mixability of the raw materials, it is preferable to mix, in the aqueous monomer solution, the water-soluble polymer obtained by solubilization.

In a case where the water-soluble polymer obtained by solubilization is added in the "polymerization step", the water-soluble polymer obtained by solubilization may be added before or after the start of polymerization. From the viewpoint of uniformity of a polymer component, it is preferable to add, before the start of polymerization, the water-soluble polymer obtained by solubilization.

In a case where the water-soluble polymer obtained by solubilization is added in the "gel-crushing step", the water-soluble polymer obtained by solubilization may be added before or during the crushing. Further, the water-soluble polymer obtained by solubilization may be split into portions and introduced separately. From the viewpoint of uniformity of a gel component, it is preferable to add, before gel crushing, the water-soluble polymer obtained by solubilization.

In a case where the water-soluble polymer obtained by solubilization is added in the "drying step", the hydrogel may be mixed, before drying, with the water-soluble polymer obtained by solubilization, or may be dried without mixing.

In a case where the water-soluble polymer obtained by solubilization is added in the "surface-crosslinking step", the water-absorbing resin which has been dried in advance may be mixed with the water-soluble polymer obtained by solubilization, or may be processed without mixing. From the viewpoint of uniform mixability between the surface treatment liquid and the water-absorbing resin, it is preferable to use the water-soluble polymer obtained by solubilization in a powder form and handle all of the water-absorbing resin and the water-soluble polymer in a powder form by using the water-soluble polymer which has been obtained by solubilization and which is in a powder form.

The water-soluble polymer obtained by solubilization accounts for 1 mass% to 60 mass%, preferably 1 mass% to 50 mass%, more preferably 1 mass% to 40 mass%, and even more preferably 1 mass% to 30 mass%, relative to all of the raw materials of the water-absorbing resin. "All of the raw materials of the water-absorbing resin" are as described above. The above ratio is a percentage of the mass of a solid content of the water-soluble polymer relative to a total mass of a solid content of all of the raw materials of the water-absorbing resin and the solid content of the water-soluble polymer.

According to the method for producing a water-absorbing resin in accordance with an aspect of the third embodiment, it is possible to produce a water-absorbing resin which achieves, due to the water-soluble polymer obtained by solubilization that is added, reduced deterioration of water absorption performance and reduced coloration.

The present invention encompasses the following inventions.

An embodiment of the present invention relates to a method for recycling a water-absorbing resin contained in a used absorbent article, the method including: a urea removal step of removing urea from the water-absorbing resin contained in the used absorbent article so that a urea content in a recycled water-absorbing resin becomes 2 mass% or less; and a recovery step of recovering a water-absorbing property of the water-absorbing resin after the urea removal step.

The second embodiment of the present invention relates to a method for producing a water-absorbing resin, in which in a step of producing a (conventional) water-absorbing resin in which a water-absorbing-resin-forming monomer is used as a raw material, a recycled water-absorbing resin which has been subjected to the urea removal treatment and then to the recovery treatment is used as one of raw materials so that a urea content becomes 2 mass% or less. The above step is one selected from the group consisting of an aqueous monomer solution preparation step, a polymerization step, a hydrogel-crushing step, a drying step, and a surface-crosslinking step.

The third embodiment of the present invention is a method for producing a water-absorbing resin, in which a water-soluble polymer of a water-absorbing resin is obtained by carrying out a decomposition treatment on the following resin so as to solubilize the following resin in water: a recycled water-absorbing resin which has undergone a recovery treatment after urea is removed so that the urea content becomes 2 mass% or less; an intermediate product of the recycled water-absorbing resin after a urea removal treatment; or a used water-absorbing resin after the urea removal treatment. Further, the third embodiment relates to a method for producing a water-absorbing resin, in which in a step of producing a (conventional) water-absorbing resin in which a water-absorbing-resin-forming monomer is used as a raw material, the aforesaid water-soluble polymer is used as one of raw materials. The above step is one selected from the group consisting of an aqueous monomer solution preparation step, a polymerization step, a hydrogel-crushing step, a drying step, and a surface-crosslinking step.

Further, the present invention encompasses the following aspects of the present invention.
<1> A method for recycling a water-absorbing resin contained in a used absorbent article, the method including:
   a urea removal step of removing urea from the water-absorbing resin contained in the used absorbent article so that a urea content in a recycled water-absorbing resin becomes 2 mass% or less; and
   a recovery step of recovering a water-absorbing property of the water-absorbing resin after the urea removal step.
<2> The method according to the above <1>, wherein the urea removal step includes a washing step of washing, with a water-based liquid, a swollen gel of the water-absorbing resin and/or a dehydration step of dehydrating absorbed liquid from the swollen gel.
<3> A recycled water-absorbing resin derived from a used absorbent article, the recycled water-absorbing resin being produced by the method according to the above <1> or <2>.
<4> A method for producing a water-absorbing resin, wherein in a production process of the water-absorbing resin in which a water-absorbing-resin-forming monomer is used as a raw material, the recycled water-absorbing resin according to the above <3> derived from the used absorbent article is added.
<5> The method according to the above <4>, wherein the recycled water-absorbing resin derived from the used absorbent article accounts for 1 mass% to 60 mass% of all raw materials of the water-absorbing resin.
<6> The method according to the above <1> or <2>, further including, after the recovery step, a solubilization step of solubilizing the recycled water-absorbing resin derived from the used absorbent article.
<7> A water-soluble polymer derived from a recycled water-absorbing resin, the water-soluble polymer being produced by the method according to the above <6>.
<8> A method for producing a water-absorbing resin, wherein in a production process of the water-absorbing resin in which a water-absorbing-resin-forming monomer is used as a raw material, the water-soluble polymer according to the above <7> derived from the recycled water-absorbing resin is used as one of raw materials.
<9> A method for recycling a water-absorbing resin contained in a used absorbent article, the method including:
   a urea removal step of removing urea from the water-absorbing resin contained in the used absorbent article so that a urea content in the water-absorbing resin contained in the used absorbent article becomes 2 mass% or less; and
   a solubilization step of solubilizing the water-absorbing resin contained in the used absorbent article, after the urea removal step.
<10> A water-soluble polymer derived from a used absorbent article, the water-soluble polymer being produced by the method according to the above <9>.
<11> A method for producing a water-absorbing resin, wherein in a production process of the water-absorbing resin in which a water-absorbing-resin-forming monomer is used as a raw material, the water-soluble polymer derived from the used absorbent article according to the above <10> is used as one of raw materials.
<12> An absorbent article including the recycled water-absorbing resin according to the above <3>.
<13> An absorbent article including a water-absorbing resin produced by the method according to any one of the above <4>, <5>, <8>, and <11>.

The present invention is not limited to the embodiments, but can be altered by a skilled person in the art within the scope of the claims. The present invention also encompasses, in its technical scope, any embodiment derived by combining technical means disclosed in differing embodiments.

### Examples

The following description will discuss aspects of the present invention more concretely with reference to Examples and Comparative Examples below. However, the present invention are not limited to the description thereof and the present invention also encompasses in its scope any Example that is derived from an appropriate combination of technical means disclosed in different Examples.

### (a) Urea content

In a plastic container that has a volume of 250 ml and that is provided with a lid, 200.0 g of 0.9 mass% saline solution was weighed and taken. Then, into this aqueous solution, 1.00 g of a water-absorbing resin or water-absorbing agent was added, and stirring was carried out by rotating a stirrer for 16 hours. Thus, urea contained in the resin was extracted. This extraction liquid was filtered (0.45 pm) and a resultant filtrate was analyzed by liquid chromatography (HPLC), so that a urea content of the water-absorbing resin was determined.

### (b) CRC

The term "CRC" is an acronym for centrifuge retention capacity and indicates an absorption capacity of the water-absorbing resin without load at 30 minutes relative to 0.90 mass% saline.

In a bag (85 mm × 60 mm) of a nonwoven fabric (manufactured by Nankoku Pulp Industry Co., Ltd., product name: Heatron paper Model: GSP-22), 0.200 g of the water-absorbing resin was evenly put and heat-sealed. Thereafter, the bag was immersed in a large excess (typically approximately 500 mL) of a 0.90 mass% aqueous sodium chloride solution at room temperature. After 30 minutes, the bag was pulled up. Then, after 3 minutes of draining at the centrifugal power (250 G) described in edana ABSORBENCY II 441.1-99 with use of a centrifuge (manufactured by Kokusan Co., Ltd., centrifuge: Model H-122), the mass W1 (g) of the bag was measured. Further, the same operation was carried out without use of the water-absorbing resin, and the mass W0 (g) at that time was measured. Then, from W1 and W0, the centrifuge retention capacity (CRC) (g/g) was calculated according to the following Formula 1. CRC (g/ g) = (W1 (g) - W0 (g)) / (mass of water-absorbing resin (g) - 1

### (c) AUL 0.3

The term "AUL" is an acronym for absorbency under load and indicates a fluid retention capacity under pressure relative to 0.90 mass% saline.

A 400-mesh metal gauze of made of stainless steel was fused to a bottom of a plastic supporting cylinder having an inner diameter of 25 mm. Then, 0.16 g of the water-absorbing resin was evenly dispersed on the metal gauze under conditions of room temperature (20°C to 25°C) and a humidity of 50 RH%. Further, on the water-absorbing resin, a piston and a load were placed in this order, and the mass W2 (g) of this measuring device set was measured. The piston was a piston which had been adjusted so as to be capable of evenly applying a load of 2.07 kPa (0.3 psi) to the water-absorbing resin, which had an outer diameter that was slightly smaller than 25 mm, and in which no gap was produced with the supporting cylinder and up and down movements were not hindered.

A glass filter (manufactured by Sogo Laboratory Glass Works Co., Ltd., fine pore diameter: 100 pm to 120 pm) having a diameter of 90 mm was placed in a petri dish having a diameter of 150 mm. Then, 0.90 mass% saline solution (20°C to 25°C) was added as to be at the same level as an upper surface of the glass filter. On the saline solution and the glass filter, a sheet of filter paper having a diameter of 90 mm (available from Advantec Toyo Kaisha, Ltd., product name: JIS P 3801 No. 2, with a thickness of 0.26 mm and a retaining particle diameter of 5 pm) was placed in such a manner that the entire surface of the sheet of filter paper was wet. Excess liquid was thus removed. The above measuring device set was placed on the filter paper, and the liquid was absorbed under load. After one hour, the measuring device set was lifted up and the mass W3 (g) of the measuring device set was measured. Then, from W2 and W3, AUL 0.3 was calculated according to the following Formula 2. AUL 0.3 = (W3 (g) - W2 (g))/(mass of water-absorbing resin)

### (d) Color of dried material

A coloration state of the water-absorbing resin after the drying step was visually observed. A water-absorbing resin in which no coloration occurs exhibits a white color. In the case of a water-absorbing resin in which coloration is caused by an impurity such as urea, the water-absorbing resin exhibits a yellow color. It is preferable to have a color closer to white.

### [Production Example 1]

### Method for producing water-absorbing resin (1)

A reaction liquid was prepared by dissolving 0.44 parts of polyethylene glycol diacrylate (molecular weight: 523) in 550 parts of a 38 mass% aqueous sodium acrylate solution (neutralization rate: 71 mol%). Next, the reaction liquid was degassed in a nitrogen gas atmosphere for 30 minutes.

Next, to a stainless steel double arm kneader with a jacket which had two sigma-type blades with an openable lid, the above reaction liquid was fed, and a system was replaced with nitrogen gas while the reaction liquid was kept at 30°C. Then, 0.24 parts of ammonium persulfate and 0.012 parts of L-ascorbic acid were added while the reaction liquid was being stirred. Approximately one minute later, polymerization started. The polymerization was carried out at 20°C to 95°C, and after 60 minutes from the start of the polymerization, a hydrogel polymer was taken out. The hydrogel polymer thus obtained was hot air-dried at 150°C for 100 minutes. Subsequently, a dried material thus obtained was pulverized with use of a vibrating mill. Then, obtained was a water-absorbing resin precursor ground to have an uneven shape with an average particle diameter of 400 pm which had passed through a sieve of a mesh size of 850 pm but remained on a sieve of a mesh size of 106 pm.

Into 100 parts by mass of the water-absorbing resin precursor thus obtained, a surface-crosslinking agent composition liquid was mixed. The surface-crosslinking agent composition liquid was composed of 0.04 parts by mass of ethyleneglycoldiglycidyl ether, 0.9 parts by mass of propylene glycol, and 3 parts by mass of water. A mixture thus obtained was treated with heat at 210°C for 40 minutes, so that a white water-absorbing resin (1) was obtained. The water-absorbing resin (1) had an average particle diameter of 400 pm, a water-soluble component amount of 9%, a CRC of 41.7 (g/g), and an AUL 0.3 of 31.7 (g/g).

### <Production of recycled water-absorbing resin>

### [Example 1]

Into a beaker, 20.0 g of a water-absorbing resin (1) was put, and further, 600.0 g of artificial urine (1.9 mass% of urea, 0.80 mass% of sodium chloride, 0.10 mass% of magnesium chloride hexahydrate, 0.10 mass% of calcium chloride dihydrate, and 97.1 mass% of ion-exchange water) was added. Thereafter, a resultant mixture was left to stand for 24 hours and a simulated used water-absorbing resin was prepared.

Into the beaker, 1800.0 g of ion-exchange water was added and a water-washing operation was carried out by stirring for 15 minutes. Next, contents of the beaker were filtered through a 100-mesh metal gauze made of stainless steel, and then, 1956.5 g of a resultant filtrate was put back in the beaker. Into the beaker, 1900.0 g of acetone was added and a dehydration operation was carried out by stirring for 15 minutes. Next, contents of the beaker were filtered through a 100-mesh metal gauze made of stainless steel, and then, 104.2 g of a resultant filtrate was dried for 3 hours in an oven at 180°C. Subsequently, a resultant dried material was pulverized with use of a vibrating mill. Then, obtained was a recycled water-absorbing resin precursor (1) ground to have an uneven shape which had passed through a sieve of a mesh size of 850 pm but remained on a sieve of a mesh size of 106 pm.

Into 100 parts by mass of the recycled water-absorbing resin precursor (1) thus obtained, a surface-crosslinking agent composition liquid (ethyleneglycoldiglycidyl ether/propylene glycol/water = 0.04 parts by mass/0.9 parts by mass/3 parts by mass) was mixed and a mixture thus obtained was treated with heat at 210°C for 40 minutes. Thus, a white recycled water-absorbing resin (1) was obtained. The recycled water-absorbing resin (1) had a urea content of 1.5 mass%, a CRC of 40.0 (g/g), and an AUL 0.3 of 30.2 (g/g).

### [Example 2]

Into a beaker, 20.0 g of the water-absorbing resin (1) was put. Further, 600.0 g of artificial urine was added to the beaker. Then, a simulated used water-absorbing resin was prepared by leaving the beaker for 24 hours.

Into the beaker, 1800.0 g of ion-exchange water was added and a water-washing operation was carried out by stirring for 15 minutes. Next, contents of the beaker were filtered through a 100-mesh metal gauze made of stainless steel, and then, 1956.3 g of a resultant filtrate was put back in the beaker. Further, into the beaker, 1800.0 g of new ion-exchange water was added and a second water-washing operation was carried out by stirring for 15 minutes. Next, contents of the beaker were filtered through a 100-mesh metal gauze made of stainless steel, and then, 2764.8 g of a resultant filtrate was put back in the beaker. Into the beaker, 2800.0 g of acetone was added and a dehydration operation was carried out by stirring for 15 minutes. Next, contents of the beaker were filtered through a 100-mesh metal gauze made of stainless steel, and then, 88.1 g of a resultant filtrate was dried for 3 hours in an oven at 180°C. Subsequently, a resultant dried material was pulverized with use of a vibrating mill. Then, obtained was a recycled water-absorbing resin precursor (2) ground to have an uneven shape which had passed through a sieve of a mesh size of 850 pm but remained on a sieve of a mesh size of 106 pm.

Into 100 parts by mass of the recycled water-absorbing resin precursor (2) thus obtained, a surface-crosslinking agent composition liquid (ethyleneglycoldiglycidyl ether/propylene glycol/water = 0.04 parts by mass/0.9 parts by mass/3 parts by mass) was mixed and a mixture thus obtained was treated with heat at 210°C for 40 minutes. Thus, a white recycled water-absorbing resin (2) was obtained. The recycled water-absorbing resin (2) had a urea content of 0.6 mass%, a CRC of 41.1 (g/g), and an AUL 0.3 of 30.7 (g/g).

### [Example 3]

Into a beaker, 20.0 g of the water-absorbing resin (1) was put. Further, 600.0 g of artificial urine was added to the beaker. Then, a simulated used water-absorbing resin was prepared by leaving the beaker for 24 hours.

Into the beaker, 1800.0 g of ion-exchange water was added and a water-washing operation was carried out by stirring for 15 minutes. Next, the contents of the beaker were filtered through a 100-mesh metal gauze made of stainless steel, and then, 1948.3 g of a resultant filtrate was put back in the beaker. Into the beaker, 1500.0 g of a 2.7 mass% aqueous citric acid solution was added and a dehydration operation was carried out by stirring for 15 minutes. Next, contents of the beaker were filtered through a 100-mesh metal gauze made of stainless steel, and then, 372.8 g of a resultant filtrate was put back in the beaker. Further, into the beaker, 1800.0 g of new ion-exchange water was added and a water-washing operation was carried out by stirring for 15 minutes. Next, contents of the beaker were filtered through a 100-mesh metal gauze made of stainless steel, and then, 606.0 g of a resultant filtrate was put back in the beaker. Then, a neutralization treatment was carried out by dropping 64.2 g of a 10% sodium hydroxide solution while the filtrate was being stirred with a spatula. After a resultant solution was left to stand still for 15 minutes, the solution was dried in an oven at 180°C for 3 hours. Subsequently, a resultant dried material was pulverized with use of a vibrating mill. Then, obtained was a recycled water-absorbing resin precursor (3) ground to have an uneven shape which had passed through a sieve of a mesh size of 850 pm but remained on a sieve of a mesh size of 106 pm.

Into 100 parts by mass of the recycled water-absorbing resin precursor (3) thus obtained, a surface-crosslinking agent composition liquid (ethyleneglycoldiglycidyl ether/propylene glycol/water = 0.04 parts by mass/0.9 parts by mass/3 parts by mass) was mixed and a mixture thus obtained was treated with heat at 210°C for 40 minutes. Thus, a white recycled water-absorbing resin (3) was obtained. The recycled water-absorbing resin (3) had a urea content of 1.7 mass%, a CRC of 39.3 (g/g), and an AUL 0.3 of 30.1 (g/g).

### [Comparative Example 1]

Into a beaker, 20.0 g of the water-absorbing resin (1) was put. Further, 600.0 g of artificial urine was added to the beaker. Then, a simulated used water-absorbing resin was prepared by leaving the beaker for 24 hours.

The simulated used water-absorbing resin directly was dried in an oven at 180°C for 3 hours. Subsequently, a resultant dried material was pulverized with use of a vibrating mill. Then, obtained was a comparative recycled water-absorbing resin precursor (C1) ground to have an uneven shape which had passed through a sieve of a mesh size of 850 pm but remained on a sieve of a mesh size of 106 pm.

Into 100 parts by mass of the comparative recycled water-absorbing resin precursor (C1) thus obtained, a surface-crosslinking agent composition liquid (ethyleneglycoldiglycidyl ether/propylene glycol/water = 0.04 parts by mass/0.9 parts by mass/3 parts by mass) was mixed and a mixture thus obtained was treated with heat at 210°C for 40 minutes. Thus, a comparative recycled water-absorbing resin (C1) colored yellow was obtained. The comparative recycled water-absorbing resin (C1) had a urea content of 29.0 mass%, a CRC of 24.3 (g/g), and an AUL 0.3 of 17.6 (g/g).

### [Comparative Example 2]

Into a beaker, 20.0 g of the water-absorbing resin (1) was put. Further, 600.0 g of artificial urine was added to the beaker. Then, a simulated used water-absorbing resin was prepared by leaving the beaker for 24 hours.

Into the beaker, 1800.0 g of ion-exchange water was added and a water-washing operation was carried out by stirring for 15 minutes. Next, contents of the beaker were filtered through a 100-mesh metal gauze made of stainless steel, and then, 1934.5 g of a resultant filtrate was dried for 3 hours in an oven at 180°C. Subsequently, a resultant dried material was pulverized with use of a vibrating mill. Then, obtained was a comparative recycled water-absorbing resin precursor (C2) ground to have an uneven shape which had passed through a sieve of a mesh size of 850 pm but remained on a sieve of a mesh size of 106 pm.

Into 100 parts by mass of the comparative recycled water-absorbing resin precursor (C2) thus obtained, a surface-crosslinking agent composition liquid (ethyleneglycoldiglycidyl ether/propylene glycol/water = 0.04 parts by mass/0.9 parts by mass/3 parts by mass) was mixed and a mixture thus obtained was treated with heat at 210°C for 40 minutes. Thus, a comparative recycled water-absorbing resin (C2) colored yellow was obtained. The comparative recycled water-absorbing resin (C2) had a urea content of 24.9 mass%, a CRC of 27.8 (g/g), and an AUL 0.3 of 23.8 (g/g).

### /[Comparative Example 3]

Into a beaker, 20.0 g of the water-absorbing resin (1) was put. Further, 600.0 g of artificial urine was added to the beaker. Then, a simulated used water-absorbing resin was prepared by leaving the beaker for 24 hours.

Into the beaker, 1800.0 g of ion-exchange water was added and a water-washing operation was carried out by stirring for 15 minutes. Next, contents of the beaker were filtered through a 100-mesh metal gauze made of stainless steel, and then, 1944.1 g of a resultant filtrate was put back in the beaker. Further, into the beaker, 1800.0 g of new ion-exchange water was added and a second water-washing operation was carried out by stirring for 15 minutes. Next, contents of the beaker were filtered through a 100-mesh metal gauze made of stainless steel, and then, 2830.3 g of a resultant filtrate was dried for 3 hours in an oven at 180°C. Subsequently, a resultant dried material was pulverized with use of a vibrating mill. Then, obtained was a comparative recycled water-absorbing resin precursor (C3) ground to have an uneven shape which had passed through a sieve of a mesh size of 850 pm but remained on a sieve of a mesh size of 106 pm.

Into 100 parts by mass of the comparative recycled water-absorbing resin precursor (C3) thus obtained, a surface-crosslinking agent composition liquid (ethyleneglycoldiglycidyl ether/propylene glycol/water = 0.04 parts by mass/0.9 parts by mass/3 parts by mass) was mixed and a mixture thus obtained was treated with heat at 210°C for 40 minutes. Thus, a comparative recycled water-absorbing resin (C3) colored yellow was obtained. The comparative recycled water-absorbing resin (C3) had a urea content of 22.3 mass%, a CRC of 32.4 (g/g), and an AUL 0.3 of 24.6 (g/g).

### [Comparative Example 4]

Into a beaker, 20.0 g of the water-absorbing resin (1) was put. Further, 600.0 g of artificial urine was added to the beaker. Then, a simulated used water-absorbing resin was prepared by leaving the beaker for 24 hours.

Into the beaker, 1000.0 g of acetone was added and a dehydration operation was carried out by stirring for 15 minutes. Next, contents of the beaker were filtered through a 100-mesh metal gauze made of stainless steel, and then, 102.2 g of a resultant filtrate was dried for 3 hours in an oven at 180°C. Subsequently, a resultant dried material was pulverized with use of a vibrating mill. Then, obtained was a comparative recycled water-absorbing resin precursor (C4) ground to have an uneven shape which had passed through a sieve of a mesh size of 850 pm but remained on a sieve of a mesh size of 106 pm.

Into 100 parts by mass of the comparative recycled water-absorbing resin precursor (C4) thus obtained, a surface-crosslinking agent composition liquid (ethyleneglycoldiglycidyl ether/propylene glycol/water = 0.04 parts by mass/0.9 parts by mass/3 parts by mass) was mixed and a mixture thus obtained was treated with heat at 210°C for 40 minutes. Thus, a comparative recycled water-absorbing resin (C4) colored light yellow was obtained. The comparative recycled water-absorbing resin (C4) had a urea content of 3.6 mass%, a CRC of 36.6 (g/g), and an AUL 0.3 of 28.9 (g/g).

### [Comparative Example 5]

Into a beaker, 20.0 g of the water-absorbing resin (1) was put. Further, 600.0 g of artificial urine was added to the beaker. Then, a simulated used water-absorbing resin was prepared by leaving the beaker for 24 hours.

Into the beaker, 1500.0 g of a 2.7 mass% aqueous citric acid solution was added and a dehydration operation was carried out by stirring for 15 minutes. Next, contents of the beaker were filtered through a 100-mesh metal gauze made of stainless steel, and then, 333.4 g of a resultant filtrate was put back in the beaker. Into the beaker, 2000.0 g of ion-exchange water was added and a water-washing operation was carried out by stirring for 15 minutes. Next, contents of the beaker were filtered through a 100-mesh metal gauze made of stainless steel, and then, 536.5 g of a resultant filtrate was put in a 2000 mL container. Then, a neutralization treatment was carried out by dropping 64.2 g of a 10% sodium hydroxide solution while the filtrate was being stirred with a spatula. After a resultant solution was left to stand still for 15 minutes, the solution was dried in an oven at 180°C for 3 hours. Subsequently, a resultant dried material was pulverized with use of a vibrating mill. Then, obtained was a comparative recycled water-absorbing resin precursor (C5) ground to have an uneven shape which had passed through a sieve of a mesh size of 850 pm but remained on a sieve of a mesh size of 106 pm.

Into 100 parts by mass of the comparative recycled water-absorbing resin precursor (C5) thus obtained, a surface-crosslinking agent composition liquid (ethyleneglycoldiglycidyl ether/propylene glycol/water = 0.04 parts by mass/0.9 parts by mass/3 parts by mass) was mixed and a mixture thus obtained was treated with heat at 210°C for 40 minutes. Thus, a comparative recycled water-absorbing resin (C5) colored yellow was obtained. The comparative recycled water-absorbing resin (C5) had a urea content of 3.0 mass%, a CRC of 35.7 (g/g), and an AUL 0.3 of 30.1 (g/g).

Table 1 shows results of evaluating urea content, CRC, AUL 0.3, and dried material color for water-absorbing resins obtained in Production Examples, Examples, and Comparative Examples.

**[Table 1]**

| | Recycled water-absorbing resin | Urea content (mass%) | CRC (g/g) | AUL 0.3 (g/g) | Color of dried material |
|---|---|---|---|---|---|
| Production Example 1 | (1) | - | 41.7 | 31.7 | white |
| Example 1 | (2) | 1.5 | 40.0 | 30.2 | white |
| Example 2 | (3) | 0.6 | 41.1 | 30.7 | white |
| Example 3 | (4) | 1.7 | 39.3 | 30.1 | white |
| Comparative Example 1 | (C1) | 29.0 | 24.3 | 17.6 | yellow |
| Comparative Example 2 | (C2) | 24.9 | 27.8 | 23.8 | yellow |
| Comparative Example 3 | (C3) | 22.3 | 32.4 | 24.6 | yellow |
| Comparative Example 4 | (C4) | 3.6 | 36.6 | 28.9 | Light yellow |
| Comparative Example 5 | (C5) | 3.0 | 35.7 | 30.1 | yellow |

On the basis of the results shown in Table 1, for water-absorbing resins which have a urea content of 2 mass% or less in Examples, water absorption performance (CRC, AUL 0.3) is less deteriorated from the water-absorbing resin in Production Example 1, and no coloration of dried materials is observed. On the other hand, for water-absorbing resins which have a urea content of more than 2 mass%, deterioration of water absorption performance and coloration of dried materials were observed.

It can be said from the above results that the recycled water-absorbing resin in accordance with an embodiment of the present invention is a method for producing an excellent recycled water-absorbing resin which achieves water absorption performance and coloration which are less reduced from those of an unused water-absorbing resin.

### [Example 4]

### (Production of water-absorbing resin using recycled water-absorbing resin as raw material)

A reaction liquid was prepared by dissolving 0.42 parts of polyethylene glycol diacrylate (molecular weight: 523) in 539.6 parts of a 36.8 mass% aqueous sodium acrylate solution (neutralization rate: 71 mol%).

Next, to a stainless steel double arm kneader with a jacket which had two sigma-type blades with an openable lid, the above reaction liquid and 10.5 g of the recycled water-absorbing resin (1) obtained in Example 1 were fed, and a system was replaced with nitrogen gas for 30 minutes while the reaction liquid was kept at 30°C. Then, 0.24 parts of ammonium persulfate and 0.012 parts of L-ascorbic acid were added while the reaction liquid was being stirred. Approximately one minute later, polymerization started. The polymerization was carried out at 20°C to 95°C, and after 60 minutes from the start of the polymerization, a hydrogel polymer was taken out. The hydrogel polymer thus obtained was hot air-dried at 150°C for 100 minutes. Subsequently, a resultant dried material was pulverized with use of a vibrating mill. Then, obtained was a water-absorbing resin precursor (4) ground to have an uneven shape which had passed through a sieve of a mesh size of 850 pm but remained on a sieve of a mesh size of 106 pm. The water-absorbing resin precursor (4) thus obtained had a white color without coloration.

### [Comparative Example 6]

### (Production of water-absorbing resin using recycled water-absorbing resin as raw material)

A reaction liquid was prepared by dissolving 0.42 parts of polyethylene glycol diacrylate (molecular weight: 523) in 539.6 parts of a 36.8 mass% aqueous sodium acrylate solution (neutralization rate: 71 mol%).

Next, to a stainless steel double arm kneader with a jacket which had two sigma-type blades with an openable lid, the above reaction liquid and 10.5 g of the comparative recycled water-absorbing resin (C1) obtained in Comparative Example 1 were fed, and a system was replaced with nitrogen gas for 30 minutes while the reaction liquid was kept at 30°C. Then, 0.24 parts of ammonium persulfate and 0.012 parts of L-ascorbic acid were added while the reaction liquid was being stirred. Approximately one minute later, polymerization started. The polymerization was carried out at 20°C to 95°C, and after 60 minutes from the start of the polymerization, a hydrogel polymer was taken out. The hydrogel polymer thus obtained was hot air-dried at 150°C for 100 minutes. Subsequently, a resultant dried material was pulverized with use of a vibrating mill. Then, obtained was a comparative water-absorbing resin precursor (C6) ground to have an uneven shape which had passed through a sieve of a mesh size of 850 pm but remained on a sieve of a mesh size of 106 pm. The comparative water-absorbing resin precursor (C6) thus obtained was colored light yellow.

### [Production Example 2]

### (Production of water-soluble polymer obtained by solubilizing used water-absorbing resin)

Into a beaker, 20.0 g of the water-absorbing resin (1) was put. Further, 600.0 g of artificial urine was added to the beaker. Then, a simulated used water-absorbing resin was prepared by leaving the beaker for 24 hours.

Into the beaker, 1800.0 g of ion-exchange water was added and a water-washing operation was carried out by stirring for 15 minutes. Next, contents of the beaker were filtered through a 100-mesh metal gauze made of stainless steel, and then, 1942.5 g of a resultant filtrate was put back in the beaker. Into the beaker, 1900.0 g of acetone was added and a dehydration operation was carried out by stirring for 15 minutes. Next, contents of the beaker were filtered through a 100-mesh metal gauze made of stainless steel, and a urea amount of a resultant filtrate was measured. The urea amount thus measured was 1.2 mass%. Then, 106.4 g of the resultant filtrate was put back in the beaker. Into the beaker, 100 g of water was added and the temperature was increased to 80°C while stirring is being carried out. Then, 1.43 g of a 30 mass% aqueous hydrogen peroxide solution, 0.050 g of iron (II) sulfate heptahydrate, 1.00 g of L-ascorbic acid, and 3.00 g of sulfuric acid were added. As a result, decomposition of the simulated used water-absorbing resin was started. After 90 minutes, a resultant aqueous solution was filtered through a 100-mesh metal gauze, and an aqueous solution of a water-soluble polymer (1) obtained by solubilizing the used water-absorbing resin was obtained. The water-soluble polymer (1) had a weight average molecular weight of 108,000.

An insoluble material which had remained on the metal gauze used for filtration was sufficiently washed with ion-exchange water. Thereafter, the insoluble material was dried, together with the metal gauze, in an oven at 180°C for 2 hours, and a decomposition rate of the water-absorbing resin was calculated according to the following formula. The decomposition rate of the water-absorbing resin was 99.7%. Decomposition rate of water-absorbing resin (%) = [1 - {(mass of metal gauze + mass of insoluble material after drying) - (mass of metal gauze)}/ (mass of water-absorbing resin before decomposition] × 100.

The aqueous solution of the water-soluble polymer (1) was concentrated by an evaporator, and a water-soluble polymer concentrate liquid (1) having a solid content concentration of 21.1 mass% was obtained.

### [Example 5]

### (Production of water-absorbing resin using, as raw material, water-soluble polymer obtained by solubilizing used water-absorbing resin)

A reaction liquid was prepared by dissolving 0.42 parts of polyethylene glycol diacrylate (molecular weight: 523) in 522.5 parts of a 38 mass% aqueous sodium acrylate solution (neutralization rate: 71 mol%).

Next, to a stainless steel double arm kneader with a jacket which had two sigma-type blades with an openable lid, the above reaction liquid and 50.0 g of the water-soluble polymer concentrate liquid (1) obtained in Production Example 2 were fed, and a system was replaced with nitrogen gas for 30 minutes while the reaction liquid was kept at 30°C. Then, 0.24 parts of ammonium persulfate and 0.012 parts of L-ascorbic acid were added while the reaction liquid was being stirred. Approximately one minute later, polymerization started. The polymerization was carried out at 20°C to 95°C, and after 60 minutes from the start of the polymerization, a hydrogel polymer was taken out. The hydrogel polymer thus obtained was hot air-dried at 150°C for 100 minutes. Subsequently, a resultant dried material was pulverized with use of a vibrating mill. Then, obtained was a water-absorbing resin precursor (5) ground to have an uneven shape which had passed through a sieve of a mesh size of 850 pm but remained on a sieve of a mesh size of 106 pm. The water-absorbing resin precursor (5) thus obtained had a white color without coloration.

### [Production Example 3]

### (Production of comparative water-soluble polymer obtained by solubilizing used water-absorbing resin)

Into a beaker, 20.0 g of the water-absorbing resin (1) was put. Further, 600.0 g of artificial urine was added to the beaker. Then, a simulated used water-absorbing resin was prepared by leaving the beaker for 24 hours. A urea amount contained in this simulated used water-absorbing resin was measured. The urea amount thus measured was 28.8 mass%.

Next, into the beaker, 400.0 g of water was added and the temperature was increased to 80°C while stirring is being carried out. Then, 1.43 g of a 30 mass% aqueous hydrogen peroxide solution, 0.050 g of iron (II) sulfate heptahydrate, 1.00 g of L-ascorbic acid, and 3.00 g of sulfuric acid were added. As a result, decomposition of the simulated used water-absorbing resin was started. After 90 minutes, a resultant aqueous solution was filtered through a 100-mesh metal gauze, and an aqueous solution of a comparative water-soluble polymer (C1) obtained by solubilizing the used water-absorbing resin was obtained. The decomposition product of the water-absorbing resin (comparative water-soluble polymer (C1)) had a weight average molecular weight of 101,000.

An insoluble material which had remained on the metal gauze used for filtration was sufficiently washed with ion-exchange water. Thereafter, the insoluble material was dried, together with the metal gauze, in an oven at 180°C for 2 hours, and a decomposition rate was calculated. The decomposition rate was 99.4%. The aqueous solution of the comparative water-soluble polymer (C1) was concentrated by an evaporator, and a comparative water-soluble polymer concentrate liquid (C1) having a solid content concentration of 21.2 mass% was obtained.

### [Comparative Example 7]

### (Production of water-absorbing resin using, as raw material, decomposition product of used water-absorbing resin)

A reaction liquid was prepared by dissolving 0.42 parts of polyethylene glycol diacrylate (molecular weight: 523) in 522.5 parts of a 38 mass% aqueous sodium acrylate solution (neutralization rate: 71 mol%).

Next, to a stainless steel double arm kneader with a jacket which had two sigma-type blades with an openable lid, the above reaction liquid and 50.0 g of the comparative water-soluble polymer concentrate liquid (C1) obtained in Production Example 3 were fed, and a system was replaced with nitrogen gas for 30 minutes while the reaction liquid was kept at 30°C. Then, 0.24 parts of ammonium persulfate and 0.012 parts of L-ascorbic acid were added while the reaction liquid was being stirred. Approximately one minute later, polymerization started. The polymerization was carried out at 20°C to 95°C, and after 60 minutes from the start of the polymerization, a hydrogel polymer was taken out. The hydrogel polymer thus obtained was hot air-dried at 150°C for 100 minutes. Subsequently, a resultant dried material was pulverized with use of a vibrating mill. Then, obtained was a comparative water-absorbing resin precursor (C7) ground to have an uneven shape which had passed through a sieve of a mesh size of 850 pm but remained on a sieve of a mesh size of 106 pm. The comparative water-absorbing resin precursor (C7) thus obtained was colored light yellow.

Table 2 shows results of evaluating dried material color for water-absorbing resins obtained in Examples and Comparative Examples.

**[Table 2]**

| | Water-absorbing resin precursor composition (mass ratio) | Color of dried material |
|---|---|---|
| Example 4 | monomer/recycled water-absorbing resin (1) = 95/5 | white |
| Comparative Example 6 | monomer/comparative recycled water-absorbing resin (C1) = 95/5 | light yellow |
| Example 5 | monomer/water-soluble polymer concentrate liquid (1) = 95/5 | white |
| Comparative Example 7 | monomer/comparative water-soluble polymer concentrate liquid (C1)= 95/5 | light yellow |

On the basis of the results in Table 2, for the recycled water-absorbing resin which has a urea content of 2 mass% or less and the water-absorbing resin which uses, as one of the raw materials, the water-soluble polymer derived from the used absorbent article in Examples 4 and 5, no coloration of dried materials is observed. On the other hand, for the recycled water-absorbing resin which has a urea content of more than 2 mass% and the water-absorbing resin which uses, as one of the raw materials, the water-soluble polymer derived from the used absorbent article in Comparative Examples 6 and 7, coloration of dried materials is observed.

It can be said from the above results that the method for producing a recycled water-soluble polymer and the method for producing a water-absorbing resin which uses, as one of raw materials, a water-soluble polymer derived from a used absorbent article in accordance with an embodiment of the present invention is a method for producing an excellent recycled water-absorbing resin which achieves less coloration.

The present invention is not limited to the embodiments, but can be altered by a skilled person in the art within the scope of the claims. The present invention also encompasses, in its technical scope, any embodiment derived by combining technical means disclosed in differing embodiments.

## Claims

1. A method for recycling a water-absorbing resin contained in a used absorbent article, said method comprising:
a urea removal step of removing urea from the water-absorbing resin contained in the used absorbent article so that a urea content in a recycled water-absorbing resin becomes 2 mass% or less; and
a recovery step of recovering a water-absorbing property of the water-absorbing resin after said urea removal step.

2. The method according to claim 1, wherein said urea removal step includes a washing step of washing, with a water-based liquid, a swollen gel of the water-absorbing resin and/or a dehydration step of dehydrating absorbed liquid from the swollen gel.

3. A recycled water-absorbing resin derived from a used absorbent article, said recycled water-absorbing resin being produced by said method according to claim 1 or 2.

4. A method for producing a water-absorbing resin, wherein in a production process of the water-absorbing resin in which a water-absorbing-resin-forming monomer is used as a raw material, said recycled water-absorbing resin according to claim 3 derived from the used absorbent article is added.

5. The method according to claim 4, wherein said recycled water-absorbing resin derived from the used absorbent article accounts for 1 mass% to 60 mass% of all raw materials of the water-absorbing resin.

6. The method according to claim 1 or 2, further comprising, after said recovery step, a solubilization step of solubilizing the recycled water-absorbing resin derived from the used absorbent article.

7. A water-soluble polymer derived from a recycled water-absorbing resin, said water-soluble polymer being produced by said method according to claim 6.

8. A method for producing a water-absorbing resin, wherein in a production process of the water-absorbing resin in which a water-absorbing-resin-forming monomer is used as a raw material, said water-soluble polymer according to claim 7 derived from the recycled water-absorbing resin is used as one of raw materials.

9. A method for recycling a water-absorbing resin contained in a used absorbent article, said method comprising:
a urea removal step of removing urea from the water-absorbing resin contained in the used absorbent article so that a urea content in the water-absorbing resin contained in the used absorbent article becomes 2 mass% or less; and
a solubilization step of solubilizing the water-absorbing resin contained in the used absorbent article, after said urea removal step.

10. A water-soluble polymer derived from a used absorbent article, the water-soluble polymer being produced by said method according to claim 9.

11. A method for producing a water-absorbing resin, wherein in a production process of the water-absorbing resin in which a water-absorbing-resin-forming monomer is used as a raw material, said water-soluble polymer derived from the used absorbent article according to claim 10 is used as one of raw materials.

12. An absorbent article comprising said recycled water-absorbing resin according to claim 3.

13. An absorbent article comprising a water-absorbing resin produced by said method according to any one of claims 4, 5, 8, and 11.
